(19) Europäisches Patentamt
European Patent Office
Office européen des brevets

(11) **EP 2 696 071 A1**

(12) **EUROPÄISCHE PATENTANMELDUNG**

(43) Veröffentlichungstag:
**12.02.2014 Patentblatt 2014/07**

(51) Int Cl.:
***F03D 11/00*** *(2006.01)*        ***G01M 13/00*** *(2006.01)*
***G05B 23/00*** *(2006.01)*

(21) Anmeldenummer: **12005801.1**

(22) Anmeldetag: **09.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **IMO Holding GmbH**
**91350 Gremsdorf (DE)**

(72) Erfinder:
• **Volker Dietz**
**91315 Höchstadt (DE)**

• **Alexander Lamm**
**91074 Herzogenaurach (DE)**
• **Hubertus Frank**
**91315 Höchstadt (DE)**

(74) Vertreter: **Küchler, Stefan**
**Patentanwalt**
**Postfach 11 93 40**
**90103 Nürnberg (DE)**

(54) **Verfahren und Vorrichtung zur Erkennung und Überwachung der Zustände von Baugruppen und Komponenten, insbesondere in Windenergieanlagen**

(57)     Die Erfindung betrifft ein Zustandserkennungs- und Zustandsüberwachungs- System (100) zur Erfassung und Überwachung von Zustandsparametem mindestens einer Baugruppe (K) oder Komponente, insbesondere mindestens eines Lagers oder einer Drehverbindung, beispielsweise in oder an einer Windkraftanlage, sowie ein zugehöriges Verfahren, gekennzeichnet durch mindestens einen, vorzugsweise mehr als zwei, an die Baugruppe (K) oder Komponente an- oder eingebrachten Kontaktsensor(en) (3), vorzugsweise welcher mittelbar oder unmittelbar anbringbar oder einbringbar ist an einem Einbringungsort (A), insbesondere an oder auf einer ebenen oder gerundeten Fläche (1) oder Kontur dieser Baugruppe (K), beispielsweise anbringbar oder einbringbar mittels Schraubung/ Steckung/ Schweißung/ Lötung/ Klebung oder Klemmung in der Nähe eines Lagerrings in einer Windkraftanlage, vorzugsweise eines Nasenrings oder Tragrings oder Halterings eines Großwälzlagers, alternativ welcher direkt anbringbar oder einbringbar ist an oder auf mindestens eine Innen- oder Außenfläche eines Blatt-, Haupt-, oder Turmlagers einer Windkraftanlage.

Fig. 2

EP 2 696 071 A1

**Beschreibung**

Die Erfindung betrifft ein Zustandserkennungs- und Zustandsüberwachungs- System zur mindestens zeitweisen, gegebenenfalls periodischen, vorzugsweise sogar permanenten, (werte-, signal- oder datentechnischen) Erfassung und Überwachung von Zustandsparametem mindestens einer Baugruppe oder Komponente, oder gar von Teilelementen dieser Baugruppe oder Komponente, insbesondere mindestens eines Lagers oder einer Drehverbindung, beispielsweise in oder an einer Windkraftanlage, sowie ein zugehöriges Verfahren. Die Erfindung kennzeichnend ist mindestens ein die Baugruppe oder Komponente an- oder eingebrachter Kontaktsensor, vorzugsweise welcher mittelbar oder unmittelbar anbringbar oder einbringbar ist an einem Einbringungsort, insbesondere an oder auf einer ebenen oder gerundeten Fläche oder Kontur dieser Baugruppe, beispielsweise anbringbar oder einbringbar mittels Schraubung/ Steckung/ Schweißung/ Lötung/ Klebung oder Klemmung in der Nähe eines Lagerrings in einer Windkraftanlage, vorzugsweise eines Nasenrings oder Tragrings oder Halterings eines Großwälzlagers, alternativ welcher direkt anbringbar oder einbringbar ist an oder auf mindestens eine Innen- oder Außenfläche eines Blatt-, Haupt-, oder Turmlagers einer Windkraftanlage.

Problem / Ausgangssituation / Stand der Technik:

Heutige Drehverbindungen und Wälzlager, beispielsweise Großwälzlager in Windenergieanlagen, sollen nach aktuellem Stand der Technik stets mit einem Schmiermittel (Öl oder Fett) geschmiert werden, um beispielsweise Reibungen zu vermindern, um Lagerfraß zu vermeiden und folglich möglichst hohe Lebensdauern der Lager und Laufbahnsystemkomponenten zu erreichen.

Viele Lager- und Anlagenhersteller erarbeiten interessante technische Lösungen, um Mangelschmierungs- und Verschleissprobleme, welche ein vorzeitiges Ausfallen der Lager oder Drehverbindungen und deren Laufbahnsystemkomponenten bewirken können, erfassen und überwachen zu können. Beispielsweise beschreibt die EP 2153077 B1 eine Vorrichtung zum Erkennen und Überwachen von Schäden bei Wälzlagern mittels Übertragung elektrischer Energie durch induktive Kopplung. Bekannt sind ebenfalls Vorrichtungen zum Überwachen des Zustandes eines Schmiermittels in einem Lager eines Motors.

Die EP 2306006 beispielsweise weist ein Zustandsüberwachungssystem für Windturbinen auf dergestalt, dass mehrere Beschleunigungssensoren verwendet werden, welche es ermöglichen, den Betrieb der Windturbine zu überwachen. Das Überwachungsmoment scheint sich auf die gesamte Anlage zu konzentrieren anstatt auf Teilgebiete davon. Die EP 0529354 betrifft hingegen eine Vorrichtung zum Überwachen des Wälzlagers an sich, wobei Sensoren im Wälzkörperbauraum zwischen den Wälzkörpern angeordnet sind, deren Daten auf elektromagnetischem Wege übertragen werden sollen.
Letztlich stellt die EP 0637734 ein Überwachungssystem zum Messen der auf ein Wälzlager einwirkenden Belastungen dar, wobei diese Messung auf induktivem Wege mittels Verwendung von Spulen erfolgen soll, und Sensoren verwendet werden, welche innerhalb des Laufbahnsystems befindlich sind.

Nur wenige dieser Erfassungs- und Überwachungssysteme sind auch technisch ausgereift. Der Großteil dieser Systeme sind nicht vollumfänglich praxistauglich. Folglich haben sich bisher wenige dieser Systeme in der Lager- und Drehverbindungstechnik, beispielsweise beim Einsatz in Wälzlagern von Windenergieanlagen, tatsächlich flächendeckend durchgesetzt.

Viele Hersteller und Betreiber von Windenergieanlagen sind jedoch beispielsweise dazu übergegangen, Mangelschmierung und daraus resultierende Verschleissprobleme dadurch zu umgehen, dass eine permanente Zufuhr von frischem Schmiermittel sichergestellt wird. Die WO2010/125000 beschreibt ein Lager für Windenergieanlagen einschließlich Flüssigkeitsbehältnissen (engl.: "fluid canister"), welche am Umfang des äußeren Lagerrings angebracht werden, um das Lager mit frischem Schmiermittel versorgen zu können. Letztlich beschreibt auch die prioritätsältere EP 1273814 aus dem Jahr 2002 beispielsweise eine solche Vorrichtung zur Verbesserung der Schmierung von Wälzlagern, insbesondere für Lager, die in Windturbinen Einsatz finden. Bei jener Idee werden mehrere Schmierstoffbälge, welche je mit Schmierstoff befüllt sind, segmentweise an den Lagerringen installiert, um diesen Schmierstoff bedarfsweise in das Laufbahnsystem des Lagers einzuspritzen. Die Steuerung zur Einspritzung des Schmiermittels erfolgt beispielsweise über eine zentrale Schmieranlage (ZSA).

Man findet hier also eine gesteuerte Schmierstoffzuführung vor. Die Abführung des verbrauchten, alten Schmiermittels, aus dem Lager oder der Drehverbindung erfolgt vielfach über auslassende Dichtungen. Eine "Sensierung", also sensorische Erfassung des tatsächlichen Schmiereffektes im Lager, insbesondere eine sensorische Erfassung auf elektrischem oder elektronischem Wege mit nachgeschaltetem Regelkreis, findet in der Regel nicht statt. Die Realisierung einer guten Überwachung der Schmier- und Verschleisszustände in Lagern und Laufbahnsystemkomponenten ist in der Tat nicht trivial, da häufig Überwachungs- und Verschleiss-Sensorik an sich in das Laufbahnsystem selbst eingebracht werden muss. Derartige Überwachungs- und Verschleiss-Sensorik besteht in der Regel heutzutage zu einem hohen Anteil aus elektronischen oder elektromechanischen Komponenten.

Elektronik, die in widrigen Bedingungen eines Laufbahnsystems bestehen muss, hat in der Praxis jedoch sehr hohe Anforderungen an Beständigkeit gegenüber Umwelteinflüssen wie etwa hohe Temperaturdifferenzen, Resistenz gegen hohe Drücke, hohe Anforderungen an Beständigkeit gegenüber mechanischen Belastungen, etwa wirkende Zug- und Druckkräfte sowie Torsion, und schließlich auch hohe Anforderungen an Beständigkeit gegenüber Fluiden (Öl, Schmiermittel) zu erfüllen. In der Praxis weisen Erfindungen der Lager- und Drehverbindungstechnik, die über Elektronik oder Elektronikkomponenten im Laufbahnsystem verfügt, gesteigerte Ausfallraten dieser Elektronik oder Sensorik auf. (Diese Anforderungen sind etwa vergleichbar mit den Anforderungen an die Umwelt, wie sie beispielsweise in den Anforderungsspezifikationen für Automobilelektronik zu finden sind).

Erschwerend kommt hinzu, dass eventuelle Späne oder Ausbrüche, die sich mit Abnutzung des Lagers oder der Drehverbindung im Laufe der Zeit ergeben, sich "lose" im Laufbahnsystem bewegen können und somit die Elektronik im Laufbahnsystem stören, verschmutzen oder beeinträchtigen können. Derartige Störungen oder Beeinträchtigungen können zur Zerstörung der im Laufbahnsystem befindlichen Elektronik oder Sensorik führen.

Zusammenfassend gesagt ist es heutzutage sehr schwierig, eine auf Lebensdauer eines Lagers oder einer Drehverbindung ausgelegte elektronische Überwachungseinheit, welche sich im Inneren des Laufbahnsystems befindet, zu schaffen, die Schmier- und Verschleißzustände der Lager und Laufbahnsystemkomponenten zuverlässig überwachen kann. Andere Erfindungen, die lediglich ein Schmierstoffmanagement im Sinne einer gesteuerten Schmierstoffzuführung anbieten, verfügen häufig nicht über weiterführende Regel- und Sensormechanismen welche notwendig wären, um eine zuverlässige Schmierungs- und Verschleißzustandsüberwachung zu gewährleisten.

Aufgabe/ Lösung/ Beschreibung der Erfindung:

Die Lösungsidee hinter der vorliegenden Erfindung ist das Entwicklungspotenzial, das sich aus dem oben genannten gegenwärtigen Problemen des Standes der Technik ergibt. Es gilt mit der vorliegenden Erfindung die die Erfindung initiierende Aufgabe zu lösen, ein Zustandserkennungs- und Zustandüberwachungs - System zu schaffen, welche eine zeitweise, beispielsweise eine periodische, vorzugsweise sogar eine permanente, Erfassung und Überwachung von Zustandsparametem der überwachten Baugruppen und Komponenten ermöglicht, um Aussagen über den jeweiligen aktuellen Zustand der überwachten Baugruppe(n) und Komponente(n), dies kann ein Lager oder ein Großwälzlager oder eine Drehverbindung sein oder gar Teile davon, treffen zu können.

Ziel der Aufgabenlösung durch das Zustandserkennungs- und Zustandüberwachungs - Systems ist es darüber hinaus, proaktive Aussagen über beispielsweise einen der drei Betriebsparameter: "Schmierungseffekt", "Schmiermitteizustand", "Verschteisszustand", treffen zu können. Diese proaktiven Aussagen sollen in Form von gewichteten Ergebnissen Aufschluss darüber geben, ob für die hinsichtlich "Schmierungseffekt" bzw. "Schmiermittelzustand" bzw. "Verschleisszustand" überwachten Baugruppe(n)/Komponente(n) in absehbarer Zeit Schädigungen, Defekte oder Totalausfälle zu erwarten sind oder mit einer gewissen Wahrscheinlichkeit erwartet werden können.

Des Weiteren ist es Aufgabe der Erfindung, dass die für das Zustandserkennungs- und Zustandüberwachungs - System wesentlichen Sensoren, insbesondere die im Folgenden detailliert beschriebenen Kontaktsensoren, vorzugsweise jedoch auch die im Folgenden beschriebenen nebengeordneten Sensoren, nicht im Inneren des Laufbahnsystems befindlich sein sollen da dort die Ausfall- oder Störungsanfälligkeit der Sensoren erhöht ist, sondern von Außen auf die zu überwachenden Baugruppen an- oder eingebracht werden können, beispielsweise jeweils auf den Außenflächen der überwachten Baugruppe und Komponente. Anstelle des Begriffs ,nebengeordneter Sensoren' wird gleichbedeutend der Begriff ,Nebensensor' oder ,nebengeordnete Sensorik' verwendet.

In einer noch weiter entwickelten Ausgestaltungsform der Erfindung löst das erfindungsgemäße Zustandserkennungs- und Zustandüberwachungs - System die Aufgabe, bis zu vierzig unterschiedliche Betriebsmuster, welche charakteristisch sind für drohender Bauteil- oder Komponentenschädigung, insbesondere an Lagern oder Drehverbindungen, erkennen zu können.

Wird ein solches Betriebsmuster mit einer jeweils vorhandenen Wahrscheinlichkeit sicher erkannt, kann in einer besonderen Ausgestaltung der Erfindung dieses Betriebsmuster folgerichtig als nicht betriebsgemäßes Verhalten erkannt werden. Es liegt folglich mit einer gewissen Wahrscheinlichkeit ein "Fehler" in der überwachten Komponente vor. Zu jedem Fehler kann das Zustandserkennungs- und Zustandüberwachungs - System mindestens einen "Fehlercode" oder "Fehlerdiagnosecode" abspeichern. Dieser "Fehlercode" oder "Fehlerdiagnosecode" kann weitergemeldet werden.

Die Erfindung stellt somit ein Verfahren und eine Vorrichtung zur Erkennung und Überwachung des Zustands im Sinne einer Zustands-Früherkennung (engl.: "condition (based) monitoring, service and diagnose") von Lagern/ Wälzlagern und Großwälzlagern sowie für Drehverbindungen bereit. Die Vorteile der Erfindung kommen der Servicefähigkeit und der Diagnosefähigkeit der überwachten Baugruppe oder Komponente, beispielsweise eines Lagers, eines Großwälzlagers oder einer Drehverbindung, zugute.

Ebenso bietet die Erfindung verbesserte Eigenschaften hinsichtlich softwaretechnischer Modellierungen und Analysen der überwachten Baugruppen oder Komponenten, welche gegebenenfalls im Anschluss an die Zustandserkennung und Zustandsüberwachung durchgeführt werden können. Diese softwaretechnischen Modellierungen und Analysen können beispielsweise in einem Zentral- oder Kontrollrechner erfolgen, der vorzugsweise örtlich getrennt steht von der jeweils überwachten Baugruppe oder Komponenten, beziehungsweise von der überwachten Baugruppe oder Komponente.

Die Erfindung geht dabei einen neuen Weg bezogen auf die bisherigen Ideen im oben beschriebenen aktuellen Stand der Technik. Im Stand der Technik sind mannigfaltige Lösungen gezeigt, die Sensorik und Elektronik in das Laufbahnsystem einbringen, um innerhalb des Laufbahnsystems Messwerte zu erfassen. Dies ist nachteilig aus oben beschriebenen Gründen: Hohe Anforderungen an Beständigkeit gegenüber Umwelteinflüssen wie etwa hohe Temperaturdifferenzen, Resistenz gegen hohe Drücke, hohe Anforderungen an Beständigkeit gegenüber mechanischen Belastungen, etwa wirkende Zug- und Druckkräfte sowie Torsion, und schließlich auch hohe Anforderungen an Beständigkeit gegenüber Fluiden.

Von Außen an- oder einbringbaren Sensoren oder Elektronik, die im Sinne der vorliegenden Erfindung nachfolgend erklärt wird, brauchen in der Regel geringeren Anforderungen hinsichtlich Beständigkeit zu entsprechen als in das Laufbahnsystem einzubringende Sensorik oder Elektronik und sind somit vorteilhafter.

Die erfinderischen Gedanken schaffen eine Systemlösung, um zumindest einen der folgenden drei Zustände: "Schmierungseffekt" bzw. "Schmiermittelzustand" bzw. "Verschleisszustand" zu erfassen. Die erfindungsgemäße Lösung gelingt dann besonders gut, wenn ein Zustandserkennungs- und Zustandüberwachungs - System dargestellt wird, welches durch periodisches, vorzugsweise permanentes, insbesondere zeitkontinuierliches, Auswerten von Signalen und Messwerten das Erfassen und Auswerten von solchen Zustandsveränderungen ermöglicht, welche sich negativ auf die Lebensdauer einer Baugruppe oder Komponente auswirken können.

Die jeweils zu überwachende Baugruppe oder Komponente, beispielsweise ein Lager oder eine Drehverbindung, wird durch die erfindungsgemäße Lösung dementsprechend überwacht unter der Kondition, eine zumindest zeitweise oder periodische, vorzugsweise aber permanente, Aufnahme von IST-Werten bzw. IST-Daten zu realisieren, welche kontinuierlich und möglichst unterbrechungsfrei mit gespeicherten SOLL-Werten bzw. SOLL-Daten abgeglichen werden. Unter Zuhilfenahme einer Wissensdatenbank, die extern untergebracht oder angebracht sein kann, etwa beispielsweise im oben beschriebenen Zentralrechner, werden Entscheidungen über den aktuellen Zustand beispielsweise des überwachten Lagers oder der überwachten Drehverbindung unter Zuhilfenahme statistischer Wahrscheinlichkeiten getroffen.

Die Begriffe 'Wissensdatenbank', 'Wissensbasis' und 'Wissensdatenbasis' sind im Rahmen dieser Beschreibung als gleichwertig zu verstehen. Diese Wissensdatenbank kann entweder in einem (hochentwickelten) IT- und Elektroniksystem angelegt werden oder vorhanden sein, oder aber auch im oben beschriebenen Zentralrechner angelegt werden oder vorhanden sein. In dieser Wissensdatenbank (engl.: Knowledge Base") sind neben sogenannten THRESHOLD-Daten oder THRESHOLD-Werten vordefinierte Kennfelder und Betriebsmuster, sogenannte WISSENS-Daten oder WISSENS-Werte, gespeichert.

Der Begriff '(hochentwickeltes) IT- und Elektroniksystem' wird im Rahmen der Beschreibung noch später erläutert.

Ausgehend von dem physikalischen Wirkprinzip und der Kondition, dass unterschiedliche Arten von Bauteilschädigung, beispielsweise unterschiedliche Arten von Lagerschädigung, unterschiedliche Änderungen im Lauf- oder Abrollgeräuschen in diesem Bauteil, oder in benachbarten Bauteilen, beispielsweise in einem Lager, erzeugen, werden durch eine sorgfältige Aufnahme oder Erfassung der Schwingungen oder Vibrationen oder Geräusche dieses Bauteils, beispielsweise des Lagers, Rückschlüsse auf die jeweils aktuellen Zustände im Inneren des Bauteiles/ Lagers möglich.

Besonders vorteilhaft und in erfindungsgemäßen Sine ist es, diese Aufnahme der Schwingungen oder Vibrationen oder Geräusche mittels an den äußeren Flächen des Bauteils angebrachter Kontaktsensorik durchzuführen, um Rückschlüsse auf die jeweils aktuellen Zustände im Inneren des Bauteiles geschlossen werden.

Die Begriffe 'Aufnahme' oder 'Erfassung' sind dabei mit dem Begriff 'Messung' gleichzusetzen. In der Folgenden Beschreibung werden die Begriffe 'Schwingung' oder 'Vibration' vereinfacht ebenfalls als 'Geräusche' bezeichnet. In diesem Sinne sind die Begriffe 'Schwingung', 'Vibration' und 'Geräusch' als gleichwertig zu verstehen.

In Bezug auf ein Lager oder eine Drehverbindung bedeutet dies, dass mittels an den äußeren Flächen des Lagers/ der Drehverbindung an- oder eingebrachte Kontaktsensoren, die Lauf/ Abrollgeräusche des Lagers/ der Drehverbindung aufgenommen bzw. gemessen werden. Diese Lagergeräusche, sowie gegebenenfalls Nebensignale oder nebengeordnete Signale, können beispielsweise anschließend verstärkt und gefiltert, sowie ausgewertet werden. Die Auswertung dieser aufgenommenen Lagergeräusche sowie gegebenenfalls der Nebensignale erzeugt erfindungsgemäß wahrscheinlichkeitsbehaftete, in den meisten Fällen jedoch und technisch nutzbare, Erkenntnisse oder Rückschlüsse auf die aktuellen Zustände im Inneren des Bauteils oder der Komponente, beispielsweise des Lagers oder der Drehverbindung.

Anstelle des Begriffes 'nebengeordneter Sensorik' wird im Folgenden gleichbedeutend der Begriff 'Sensorik mit nebengeordneter Funktion' verwendet. Als 'Nebensignal' im begrifflichen Sinne sind im Rahmen der Beschreibung solche Signale zu verstehen, welche mittels nebengeordneter Sensorik aufgenommen beziehungsweise erfasst werden können. Ein solches ‚Nebensignal' oder 'nebengeordnetes Signal' kann beispielsweise sein, ist aber nicht begrenzt auf, ein erfasstes Signal, ein erfasster Wert oder ein erfasstes Datum hinsichtlich Drehzahl-,/ Position-,/ Beschleunigung-,/ Temperatur,-/ Druck-/ oder Schmiermittelzustand. In einer weiteren Ausgestaltung der Erfindung kann auch ein Geschwindigkeitszustand ein 'nebengeordnetes Signal' darstellen.

Kontaktsensorik als auch Nebensensorik ermöglichen somit die Erfassung der Zustände in der überwachten Baugruppe oder Komponente.

Ebenso ist es denkbar und erfindungsgemäß, dass die nebengeordnete Sensorik sowohl aktuelle Betriebszustände, also aktuelle Momentanwerte, als auch über eine gewisse Zeitspanne gemittelte Zustände, also beispielsweise die mittlere Drehzahl, die mittlere Beschleunigung, die mittlere Temperatur, den mittleren Druck, oder den mittleren Schmiermittelzustand aufnehmen beziehungsweise erfassen kann.

Als Lager oder der Drehverbindung kommen erfindungsgemäß alle in der Historie und gemäß aktuellem Stand der Technik gängigen Formen und Bauarten der Drehverbindungen oder Wälzlager oder Großwälzlager sowie Momentenlager in Frage, beispielsweise - aber nicht begrenzt auf: Ein- oder mehrreihige Vierpunktlager, Zylinderrollenlager, Kombilager, Kreuzrollenlager, Kegelrollenlager, Drahtlager, ein- oder mehrreihige Sonderdrehverbindungen, Kugeldrehverbindungen, Rollendrehverbindungen. Kreuzrollendrehverbindungen, Kombidrehverbindungen Rolle/ Kugel, sowie alle gängigen in Windenergieanlagen vorhandenen oder einsetzbaren Blattlager (engl.: "Pitchlager") sowie Turm- oder Azimutlager-, Haupt- oder Rotorlager, et cetera.

Dieses jeweilige Lager oder diese jeweilige Drehverbindung dient entweder der axialen- und/oder der radialen Aufnahme von Kräften und Momenten. Eine weitere Ausgestaltung der Erfindung ermöglicht auch den Einsatz von Rillenkugellagern, Pendelkugellagern, einfachen oder doppelten Schrägkugellagern, Axialrillenkugellagenr, Nadellager und Pendelrollenlager, Tonnenlager, sowie sogar von Toroidalrollenlagern.

Selbstverständlich können im Sinne der Erfindung die benannten Kontaktsensoren, gegebenenfalls in Verbindung mit zusätzlicher nebengeordneter Sensorik, auch auf Außenflächen der Drehverbindungen von Schwenkantrieben an- oder eingebracht werden. Ebenso ist die An- oder Einbringung der Kontaktsensoren auf dem Gehäuse oder der Kontur, oder auf Teilen des Gehäuses, der Schwenkantriebe möglich und erfindungsgemäß.

Zur Begrifflichkeit des ‚Schwenkantrieb': Ein Schwenkantrieb, in der Literatur ebenfalls als 'Schwenktrieb' bezeichnet, (engl.: "swivel drive", "slew drive" oder "pivoting drive") unterscheidet sich von Drehverbindungen (engl.: "slew ring" oder "slewing ring") oder von Dreh- oder Momentenlagern (engl.: "rotational bearing" oder "torque-bearing") dadurch, dass die im Schwenkantrieb befindliche Drehverbindung oder das dortige Lager verzahnte Elemente aufweist und diese verzahnten Elemente in direktem Kontakt mit einer Schneckenwelle stehen. Es kann diese Schneckenwelle durch einen Hydraulik- oder Elektromotor oder auch durch eine Pumpe in Drehbewegung versetzt werden, wodurch folglich die Drehbewegung über die kämmenden Flanken der Schneckenwellenzähne auf die verzahnten Elemente der Drehverbindung oder des Lagers übertragen werden. Selbstverständlich sind die Kontaktsensoren sowohl für den Einsatz bei schneckengetrieben Schwenktrieben geeignet, als auch für den Einsatz mit ritzelgetrieben Schwenktrieben. Ebenso ist die nebengeordnete Sensorik sowohl für den Einsatz bei schneckengetrieben Schwenktrieben geeignet, als auch für den Einsatz mit ritzelgetrieben Schwenktrieben.

Insbesondere ist es im Sinne der Erfindung wenn die Kontaktsensoren an den äußeren Flächen des Lagers bzw. der Drehverbindung an- oder eingebracht sind, beispielsweise fest aufgeklebt sind. Auch eine Auf- oder Einlackierung der Kontaktsensoren an eine oder mehrere der äußeren Flächen, oder alternativ die Einlaminierung der Kontaktsensoren in die Schichtenabfolge der jeweiligen äußeren Fläche ist möglich und denkbar, solange die Strukturen und Abmessungen des Kontaktsensors diese Auf- oder Einbringungsart zulassen. Gleiches gilt für die nebengeordnete Sensorik.

In der weiteren Beschreibung wird der Begriff ‚Kontaktsensor' gleichbedeutend mit dem Begriff ‚Kontaktsensorbaugruppe' verwendet.

Die gleiche Aufgabe wie ein Kontaktsensor beziehungsweise eine Kontaktsensorbaugruppe erfüllt die im weiteren Verlauf beschriebene ‚Sensormatte' oder das 'Sensornetzwerk'. Auch bei einer derartigen ‚Sensormatte' beziehungsweise einem derartigen ‚Sensornetzwerk' handelt es sich um ‚Kontaktsensorik' im Sinne der Erfindung. Jene Kontaktsensorik, wie auch jeder diskrete Kontaktsensor beziehungsweise jede Kontaktsensorbaugruppe, kann als ein verhältnismäßig trivialer Aufnehmer oder Erfasser fungieren, welcher Signale beziehungsweise Geräusche lediglich physikalisch zu erfassen imstande ist, als auch als eher intelligenter Sensor (engl.: "smart sensor") vorzugsweise mit verbundener Logik- oder Elektronikbaugruppe, gegebenenfalls sogar mit anhängigem Mikrokontroller, wobei ein solcher intelligenter Sensor die erfassten Werte, Signale oder Daten, beispielsweise also die aufgenommenen Geräusche, mittels integriertem Mikroprozessor und Steuerwerk sowie Rechenwerk, sowie gegebenenfalls in diesem Mikroprozessor integrierten Speicher- und Schnittstellenbausteinen, verarbeiten und weiterleiten kann. Alle soeben genannten Ausprägungsstufen eines solchen intelligenten Sensors sind im Sinne der Erfindung.

Zumindest jedoch, beispielsweise in der einfachsten und in der Regel kostengünstigsten Ausprägungsstufe, weist der erfindungsgemäße Kontaktsensor oder die erfindungsgemäße Kontaktsensorik ein oder mehrere Mittel zur physikalischen Aufnahme bzw. Erfassung der Signale beziehungsweise Geräusche auf. Dieses jeweilige Mittel zur physikalischen Aufnahme bzw. Erfassung von Geräuschen mittels der Kontaktsensorik kann grundsätzlich in drei Kategorien eingeteilt werden. Erstens: Piezoelektrischer Aufnehmer/Erfasser. Zweitens: Induktiver Aufnehmer/Erfasser. Drittens: Kapazitiver Aufnehmer/Erfasser.

Gleiches gilt für die nebengeordnete Sensorik: Zumindest, beispielsweise in der trivialsten und kostengünstigsten Ausprägungsstufe, weist ein nebengeordneter Sensor ein oder mehrere Mittel zur physikalischen Aufnahme bzw. Erfassung nebengeordneter Signale auf. Ein nebengeordneter Sensor kann als Aufnehmer oder Erfasser fungieren, welcher nebengeordnete Signale lediglich physikalisch zu erfassen imstande ist, als auch als relativ intelligenter Sensor (analog zu obiger Schilderung) mit anhängiger Logik- oder Elektronikbaugruppe beispielsweise mittels integriertem Mikroprozessor und Steuerwerk sowie Rechenwerk, sowie gegebenenfalls integrierter Speicher- und Schnittstellenbausteinen. Alle soeben genannten Ausprägungsstufen eines solchen intelligenten nebengeordneten Sensors sind im Sinne der Erfindung.

Kontaktsensoren mit piezoelektrischen Aufnehmern werden gemäß der Erfindung zweckmäßigerweise direkt, d.h. körperlich, auf die Oberfläche oder Kontur der zu überwachenden Baugruppe oder Komponente an- oder eingebracht. Eine sensorinterne Membran, welche mit der Oberfläche oder Kontur flächig oder punktuell kontaktieren kann, ist vorzugsweise mit dem im Inneren des Kontaktsensors verbunden. Treten Geräusche, Vibrationen, Schwingungen in der überwachten Baugruppe oder Komponente auf, so werden diese Geräusche vom Kontaktsensor aufgenommen wie folgt: Diese Schwingung gleicht mehrfachen mechanischen Änderungen in Lage und/ oder Ausdehnung der Membran. Diese mechanischen Änderungen werden beispielsweise auf körperlich an der Membran befestigte Piezoelemente übertragen. Gemäß des piezoelektrischen Effektes erzeugen mechanische Änderungen des Piezomateriales elektrische Potentialunterschiede vorzugsweise an den Enden der Piezokeramik. Elektrische Potentialunterschiede bedingen elektrische Spannung. Diese elektrische Spannung wird an eine Schnittstelle weitergeleitet.

In einer weiteren Ausgestaltung des piezoelektrischen Aufnehmers kann auf die sensorinterne Membran verzichtet werden.

Kontaktsensoren mit induktiven Aufnehmern hingegen werden vorzugsweise ebenfalls direkt/körperlich auf die Oberfläche der zu überwachenden Baugruppe oder Komponente an- oder eingebracht. Siehe oben. Eine sensorinterne Membran kann durch die aufgenommenen Signale beziehungsweise Geräusche in Schwingung versetzt werden. Diese Schwingung gleicht mehrfachen mechanischen Änderungen in Lage und/ oder Ausdehnung der Membran. Diese mechanischen Änderungen werden beispielsweise auf körperlich an der Membran befestigte Permanentmagneten übertragen, wobei der jeweilige Permanentmagnet in eine Spule eintaucht oder entlang dieser Spule beweglich ist, also relativ zur Spule. Gemäß der elektrischen Induktion erzeugen mechanische Änderungen der Lage in einem magnetischen Feld elektrische Potentialunterschiede. Elektrische Potentialunterschiede bedingen elektrische Spannung. Elektrische Potentialunterschiede bedingen elektrische Spannung. Diese elektrische Spannung wird an eine Schnittstelle weitergeleitet. In einer weiteren Ausgestaltung dieses induktiven Aufnehmers kann auf die sensorinterne Membran verzichtet werden.

In einer weiteren Ausgestaltung dieses induktiven Aufnehmers kann sich eine Spule innerhalb eines permanentmagnetischen Kerns bewegen, also relativ zum permanentmagnetischen Material bewegen, und somit Spannung zu induzieren. Alternativ ist es möglich, dass beide magnetischen Pole aus Elektromagneten gebildet werden. Dann erfolgt die Induktion durch die Relativbewegung dieser beiden magnetischen Pole zueinander. In jedem Falle basiert das Wirkprinzip eines solchen induktiven Aufnehmers auf dem Prinzip eines bewegten Leiters in Kombination mit einem magnetischen Feld. Elektrische Potentialunterschiede bedingen elektrische Spannung. Diese elektrische Spannung wird an eine Schnittstelle weitergeleitet.

Kontaktsensoren mit kapazitiven Aufnehmern werden beispielsweise ebenfalls direkt/körperlich auf die Oberfläche der zu überwachenden Baugruppe oder Komponente an- oder eingebracht. Eine sensorinterne Membran kann durch die aufgenommenen Signale beziehungsweise Geräusche in Schwingung versetzt werden. Diese Schwingung gleicht mehrfachen mechanischen Änderungen in Lage und/ oder Ausdehnung der Membran. Diese mechanischen Änderungen werden beispielsweise auf eine oder mehrere körperlich an der Membran befestigte(n) Elektrode(n) übertragen. Gemäß den Gesetzen der Elektrotechnik erzeugen mechanische Änderungen des elektrischen Feldes Kapazitätsunterschiede, welche elektrische Potentialunterschiede bedingen. Elektrische Potentialunterschiede bedingen elektrische Spannung. Diese elektrische Spannung wird an eine Schnittstelle weitergeleitet.

In einer weiteren Ausgestaltung des kapazitiven Aufnehmers kann auch hier auf die sensorinterne Membran verzichtet werden.

Im Folgenden wird die physikalische Grundlage nach heutigem Stand der Wissenschaft des Wirkprinzips der ‚Vibrations'- oder ‚Schwingungs-'Analyse im weiteren Verlauf vereinfacht als 'Geräusch'-Analyse bezeichnet und erläutert:

Ein elastischer Festkörper kann im Unterschied zum ruhenden Fluid neben Normalspannungen auch Schubspannungen aufnehmen. Deshalb können sich im allseitig unbegrenzten Festkörper zwei verschiedene Arten Körperschallwellen ausbreiten, nämlich als Longitudinalwellen und Transversalwellen. Diese Wellen breiten sich unabhängig voneinander aus. In beiden Fällen ist die Schallgeschwindigkeit weitestgehend unabhängig der Frequenz. Die Schallgeschwindigkeit wird durch die Dichte, den Schubmodul (bei Transversalwellen) und den Elastizitätsmodul (bei Longitudinalwellen) beeinflusst.

Die überwachten oder zu überwachenden Baugruppen und Komponenten im Sinne der vorliegenden Erfindung sind Festkörper, vorzugsweise Festkörper mit begrenzenden Flächen und Konturen, etwa mit planaren Kontaktflächen oder axiale oder radiale gerundeten Außenflächen. Es kommt bei der Geräuschausbreitung in der Baugruppe zur Kopplung zwischen Longitudinalwellen und Transversalwellen, wodurch weitere Arten von mechanischen Körperschallwellen entstehen. Die bedeutendste Wellenart sind die Biegewellen, bei denen Biege-Verformungen auftreten. Die Schallgeschwindigkeit dieser Wellen ist deutlich geringer als die der Longitudinalwellen und Transversalwellen und sie ist frequenzabhängig (Dispersion). Biegewellen transportieren aber meistens deutlich mehr Schallenergie und sind die wesentliche Ursache für die Abstrahlung von Luftschall.

Alle weiter oben beschriebenen Wellen werden im Sinne der Erfindung als 'Geräusche' bezeichnet.

Der erfindungsgemäße Kontaktsensor oder - ganz Allgemein - die in einer Anlage befindliche Kontaktsensorik dient grundsätzlich als Aufnehmer/ Erfasser für diese 'Geräusche'.

Das Zustandserkennungs- und Zustandüberwachungs - System ist befähigt, sowohl diese 'Geräusche', welche durch die Kontaktsensorik aufgenommen/ erfasst werden, auszuwerten, als auch verarbeitete Signale/ Daten/ Werte für weitere Anwendungen zur Verfügung zu stellen. Insbesondere gilt es dabei, auch die von der nebengeordneten Sensorik erfassten/aufgenommenen Größen, können EDV-technisch verarbeitet werden, um Zustandsinformationen hinsichtlich des Betriebs der überwachten Anlage zu gewinnen. Bezogen auf eine Windenergieanlage können diese Betriebszustände sein:

Drehzahl des Rotors oder der Antriebswelle, Position der Gondel bei Azimutverstellung und/oder Position verstellter (engl.: "gepitchter") Blätter, Druck im Druckspeicher der Hydraulikanlage, Füllstand an der Hydraulikanlage oder der Schmiermittelanlage, Leistung der Windenergieanlage, aktuelle und mittlere Windgeschwindigkeit, Temperatur des Schmiermittels - bspws. etwa des Öls - oder des Kühlmittels, aktuelle und mittlere Temperatur des Lagers, aktuelle und mittlere Außentemperatur, et cetera.

In Bezug auf eine Windenergieanlage ist die Installation von nebengeordneter Sensorik nicht nur am Lager oder an der Drehverbindung im Sinne der Erfindung sinnvoll, sondern es hat sich als vorteilhaft erwiesen nebengeordnete Sensorik zusätzlich in oder am Generator sowie in oder am Hauptgetriebe, sowie in oder an der Gondel, in einer weiteren Ausgestaltung der Erfindung beispielsweise auch als Windgeschwindigkeitsmesser auf der Gondel, anzubringen. Zur Gewinnung von Informationen über weitere Betriebszustände empfiehlt sich zusätzlich die Aufnahme/ Erfassung von Temperaturen in oder an elektrischen Kraftübertragem oder auch die Messung der Wicklungstemperaturen im Hauptgenerator oder an anderen Generatormodulen.

Das der Erfindung entsprechende Zustandserkennungs- und Zustandüberwachungs - System genügt den folgenden eigenschaftlichen Maßgaben: Kompatibilität mit gängigen EDV- und IT-Systemen, insbesondere mit hochentwickelten IT- und Elektroniksystemen, hoher Automatisierungsgrad, Nachrüstbarkeit mit marktgängigen Software- und Betriebssystemen, WEB-basiertheit, Dokumentationsfähigkeit und Unterstützung von Reportingfunktionen.

Das erfindungsgemäße IT- und Elektroniksystem ist verbunden oder verbindbar mit mindestens einer, vorzugsweise mit mehreren, Auswerteeinheiten, beispielsweise mechatronische oder elektronische Auswerteeinheiten. In einer weiteren Ausgestaltung der Erfindung sind diese Auswerteeinheiten Teil des IT- und Elektroniksystems.

Das gegenständliche Zustandserkennungs- und Zustandüberwachungs - System umfasst oder beinhaltet mindestens ein solches, ggfs. hochentwickeltes, IT- und Elektroniksystem und mindestens eine Wissensdatenbank, sowie mindestens einen der oben beschriebenen Kontaktsensoren, vorzugsweise jedoch ein Netzwerk aus mehreren der oben beschriebenen Kontaktsensoren, sowie mindestens einen der oben beschriebenen nebengeordneten Sensoren oder einen Verbund aus nebengeordneter Sensorik.

Alle Sensoren, sowohl Kontaktsensoren als auch nebengeordnete Sensorik, können mittels elektrischen Leitungen zur zu erfassenden oder zu überwachenden Komponente beziehungsweise zum zu erfassenden bzw. zu überwachenden Bauteil, d.h. beispielsweise mittels elektrischen Leitungen oder Busleitungen, welche vom und zum Lager oder zur Drehverbindung führen, verbunden sein. Bevorzugt wird jedoch drahtlose Kommunikationstechnologie.

Die Funktionsweise der Kontaktsensoren, welche ebenfalls leitungsgebunden oder vorzugsweise drahtlos mit Partnereinheiten korrespondieren, basiert auf dem oben beschriebenen Wirkprinzip der Aufnahme/ Erfassung von Geräuschen. Die aufgenommenen/erfassten Signale/ Daten/ Werte werden durch spätere ‚Geräusch'-Analyse ausgewertet. Alle soeben genannten Sensoren befinden sich in der Regel in einer bevorzugten Ausgestaltungsform in unmittelbarer Umgebung des zu überwachenden Bauteiles oder der zu überwachenden Komponente.

Die elektrische Spannung, welche am Ausgang eines solchen Kontaktsensors, beispielsweise am Ausgang der induktiven oder kapazitiven oder piezoelektrischen Sensors, anliegt und ggfs. durch zusätzliche elektrische Meßvorrichtungen kontrolliert und beobachtet werden kann, wird an eine Partnereinheit, vorzugsweise die Auswerteeinheit weitergeleitet, gegebenenfalls unter vorheriger Verstärkung oder Filterung des Signals/ Datums/ Wertes. Dieser Prozessschritt der Verstärkung oder Filterung ist optional und kann bei ausreichender Güte der Information entfallen. Erfindungsgemäß kann diese Verstärkung oder Filterung des Signals/ Datums/ Wertes in einer Auswerteeinheit und/ oder in dem IT- und Elektroniksystem erfolgen.

Bei der Aufnahme/ Erfassung der oben genannten ‚Geräusche' mittels der Kontaktsensorik können beispielsweise Anti-Aliasing-Filter eingesetzt werden. Beispielsweise wird bei Geräuschen der Frequenz 10 kHz eine Signalabtastrate von 20 kHz angewendet. Die Steuerung der Filterung wird vorzugsweise durch das hochentwickelte IT- und Elektroniksystem vorgenommen. Die Filterung von Signalen kann auch innerhalb der beschriebenen Auswerteeinheit erfolgen.

Die Auswertung der mittels Kontaktsensorik gewonnenen Bauteilgeräusche, beispielsweise der Lagergeräusche, sowie gegebenenfalls der erfassten Nebensignale, ermöglicht das Auffinden charakteristischer Frequenzanteile und Schallamplituden: Beispielsweise können Schädigungen in einem Lager oder in einer Drehverbindung sowohl die Amplituden der Zahneingriffsschwingung und deren Harmonische beeinflussen, als auch andere Modulationsschwingungen bewirken. Das aufgenommene/ erfasste Geräuschspektrum ist dann verändert im Vergleich zum Geräuschspektrum eines schadlosen Lagers beziehungsweise einer schadlosen Drehverbindung. Diese Veränderung können durch im Wesentlichen drei weiterführende Analyseverfahren, die der Verstärkung und Filterung dienen, im Frequenzbereich erkennbar gemacht:

- Analyse der Amplitudenspektren,
- Cepstrumanalyse,
- Hüllkurvenanalyse
  sowie
- Analyse frequenzselektiver Kennwerte.

Diese drei weiterführenden Analyseverfahren werden im Sinne der Erfindung idealerweise durch das oder innerhalb des hochentwickelte IT- und Elektroniksystem(s) durchgeführt.

Die Funktionsweise der nebengeordneten Sensoren kann auf unterschiedlichen oder mehreren Wirkprinzipien basieren, beispielsweise auf der Temperaturmessung und/oder Druckmessung und/oder Drehzahlmessung und/oder Beschleunigungsmessung und/oder Geschwindigkeitsmessung und/oder Schmiermittelzustandsermittlung, gegebenenfalls auch auf Basis der inkrementalen Sensorechnik, wie sie aus der Positionserkennung bekannt ist.

Beispielsweise können unter Zuhilfenahme des hochentwickelten IT- und Elektroniksystems vorzugsweise aus den Signalen /Daten/ Werten der Kontaktsensorik und ggfs. zusätzlich unter Mitberücksichtigung von Signalen /Daten /Werten der nebengeordneten Sensorik zumindest einige der folgenden zehn Schwingungsgrößen herausgelesen oder in einer der, gegebenenfalls extern angebrachten, Auswerteeinheit(en), umgerechnet, beziehungsweise ermittelt werden:

Schalldruck, Schalldruckpegel, Schallschnelle, Schallauslenkung, Schallbeschleunigung, Schallintensität, Schallleistung, Schallenergiedichte, Schallfluss, et cetera. Insbesondere aber ist die Schallgeschwindigkeit von Interesse, welche der Gleichung

$c = \lambda * f$, beziehungsweise [Schallgeschwindigkeit] = [Wellenlänge] mal [Frequenz], genügt und stark material- bzw. medienabhängig ist.

Alternativ ist es möglich, die Ermittlung der oben genannten Schwingungsgrößen beispielsweise im oben beschriebenen Zentralrechner, durchzuführen. In einer weiteren Ausgestaltung der Erfindung ist auch die mindestens eine Auswerteeinheit befähigt, diese Ermittlung vorzunehmen. Sofern oben beschriebene intelligente Sensoren (engl.: "smart sensor") im Sinne der Erfindung eingesetzt werden, können in einer technisch sehr ausgereiften Ausprägung der Erfindung die oben genannten Schwingungsgrößen gegebenenfalls auch innerhalb des intelligenten Sensors oder innerhalb des intelligenten Sensornetzwerks errechnet werden.

Alle erfassten/aufgenommenen Signale /Daten /Werte, welche nicht in direkter physikalischer Verbindung mit oben genannten Schwingungsgrößen stehen also Nebensignale wie, beispielsweise aktuelle oder mittlere Temperaturen und/oder Drücke und/oder Drehzahlen und/oder Beschleunigungen und/oder Geschwindigkeiten und/oder Schmiermittelzustände, etc. werden im Sinne der Erfindung ausschließlich mittels der nebengeordneten Sensorik aufgenommen/ erfasst.

Die werte-, signal- oder datentechnische Verbindung zwischen dem Kontaktsensor und der, gegebenenfalls extern angebrachten, Auswerteeinheit, als auch die werte-, signal- oder datentechnische Verbindung eines Nebensensors mit einer Auswerteeinheit erfolgt auf Basis aktuell gängiger Protokolle und Nachrichtendienste.

Wichtig ist bei der An- oder Einbringung aller drahtgebundenen Sensorik an die Baugruppe oder Komponente ist, dass jene Sensoren, welche auf drahtgebundene Weise mit nachfolgenden Auswerte- oder Elektronikeinheiten verbunden sind, vorzugsweise an einem stets nicht rotierenden oder stets nicht stark bewegten Bauteil oder Komponente angebracht werden. Dies ist in der Praxis schlichtweg nötig um eine Aufwickeln oder Abreißen der Drähte zu vermeiden.

In der bevorzugten Ausgestaltungsform der Erfindung ist stets die drahtlose (engl.: "wireless") Verbindung aller Sensorik zur Auswerteeinheit ausgeprägt: Die Übertragung erfolgt somit beispielsweise über Funkstrecke(n) anstatt über diskrete Leitungen oder über Busleitungen. In dem solchen bevorzugten Falle verfügt diese Sensorik, sowohl die Kontaktsensorik als auch die nebengeordnete Sensorik, vorteilhafterweise über jeweils eigene Spannungsversorgung. Insbesondere vorteilhaft bei der drahtlosen Ausgestaltungsform der Erfindung ist die Tatsache, dass sich das oben beschriebene Problem des Aufwickelns oder Abreißens von Drähten nicht gegeben istt.

Die erfindungsgemäße Lösung des Zustanderkennungs- und Zustandüberwachungs - System ist des Weiteren in der Lage, Vergleiche der erfassten (elektrischen) Signale/ Werte/Daten mit den festgelegten Grenzwerten der zu überwachenden Baugruppe bzw. der zu überwachenden Komponente, beispielsweise eines Lagers oder einer Drehverbindung in einer Windkraftanlage anzustellen. Dabei können auftretende Messschwankungen, beispielsweise Drehzahlschwankungen während des dynamischen Betriebs der Baugruppe oder Komponente, berücksichtigt werden.

Ein erfindungsgemäßes IT- und Elektroniksystem ist grundsätzlich befähigt, folgende drei Recheoperationen zumindest zu unterstützen, idealerweise jedoch selbst durchzuführen:

- FFT (engl.: "Fast Fourier Transformation") des erfassten Frequenzspektrums,
- Hüllkurvenanalyse des erfassten Frequenzspektrums, sowie
- entsprechende Ordnungsanalyse.

Diese Ordnungsanalyse ist dabei als die Abbildung der erfassten Frequenzspektren als Ordnungsspektren zu verstehen.

Wird die erfindungsgemäße Lösung beispielsweise zur Erfassung und Überwachung von Lagern und Drehverbindungen in Windenergieanlagen eingesetzt, so ist das Zustandserkennungs- und Zustandüberwachungs - System im Grundsatz technisch befähigt, die folgenden Bauteile bzw. Komponenten zu überwachen:

- Hauptlager (engl.: "main bearing",
- Turm- oder Azimutlager,
- Blattlager (engl.: "blade bearing"),
- gegebenenfalls jedoch auch eventuell vorhandene Getriebelager bzw. Generatorlager.

Die genannten Komponenten der Windenergieanlage stehen somit durch das erfindungsgemäße Zustandserkennungs- und Zustandüberwachungs- Systems unter zumindest zeitweiser, besser periodischer, im Idealfalle gar unter permanenter Überwachung durch das Zustandserkennungs- und Zustandüberwachungs- System. An diesen zu überwachenden Lagern sind beispielsweise mehrere, pro Lager beispielsweise mindestens einer, eventuell insgesamt sogar zwischen zwei und zehn, Kontaktsensoren, zur Aufnahme/Erfassung von Geräusch- Signalen/ Werten/ Daten, den sogenannten, IST-Werten oder IST-Daten an- oder eingebracht.

In einer speziellen Ausgestaltungsform werden insgesamt vier Kontaktsensoren pro Lager beispielsweise auf der axialen Außenfläche und auch auf der axial dazu parallel versetzten unteren Außenfläche, aufgeklebt, aufgeschweißt oder eingelötet, in die Lackschichtenfolge einlaminiert, geschraubt oder gesteckt oder geklemmt, oder einfach mittels Installations,-Montage-, oder Halteblechen- oder Haltevorrichtungen angebracht.

Als ‚Außenfläche' im Sinne der Erfindung ist dabei nicht nur zwangsweise die Fläche an der radial äußersten Seite eines Lagers zu verstehen, sondern: Im Sinne der Erfindung ist eine 'Außenfläche', im späteren Verlauf schlichtweg nur als ‚Fläche' oder bezeichnet, jede planare oder gerundete 'Kontur', die die zu überwachende Baugruppe oder Komponente körperlich begrenzt. In diesem Sinne ist jede Körperfläche, die den Festkörper der überwachende Baugruppe oder Komponente gegenüber einem anderen Körpern abgrenzt, als 'Außenfläche' oder ‚Fläche' oder ‚Kontur' zu verstehen. Demzufolge sind beispielsweise auch stets die radial innen liegenden kreisförmige Flächen eines Lagers oder einer Drehverbindung, oder alle die Baugruppe oder Komponente axial oben und unten begrenzenden Flächen, als ‚ Flächen' oder ‚Außenflächen' oder ‚Konturen' zu verstehen.

Die mittels Kontaktsensor(en) zeitweise, periodisch oder permanent aufgenommenen/erfassten IST-Werte oder IST-Daten der Lager-Geräusche werden stets, im Idealfall sogar kontinuierlich, mit SOLL-Werten oder SOLL-Daten der Lager-Geräusche abgeglichen. Diese SOLL-Werte oder SOLL-Daten können entweder im (hochentwickelten) IT- und Elektroniksystem abgelegt oder gespeichert sein, oder aber auch im oben beschriebenen Kontroll- oder Zentralrechner, vorzugsweise jedoch in der mindestens einen Auswerteeinheit. Auch eine redundante Speicherung der Daten ist denkbar und im Sinne der Erfindung. In einer vorteilhaftesten Ausgestaltung der Erfindung sind jedoch die SOLL- Werte oder SOLL-Daten direkt, ggfs. redundant, im Speicher von intelligenten Kontaktsensoren abgelegt.

In einer weiteren Ausgestaltung der Erfindung ist es im Insbesonderen denkbar, dass das hochentwickelte IT- und Elektroniksystem und der Kontroll- oder Zentralrechner eine Einheit bilden.

Sobald, und jedes Mal, wenn eine herrschende Differenz zwischen aufgenommenen bzw. erfassten IST-Werten bzw. IST-Daten der Lager-Geräusche und den SOLL-Werten bzw. SOLL-Daten der Lager-Geräusche eine gewisse Schwelle, den oben genannten festgelegten Grenzwert, überschreitet, wird unter Zuhilfenahme der erfindungsgemäßen Wissensdatenbank eine oder mehrere Entscheidungen über den aktuellen Geräusch-Zustand des überwachten Lagers getroffen.

Dieser aktuelle Geräusch-Zustand, also alle jeweiligen IST-Werte bzw. IST-Daten der momentan aufgenommenen/ erfassten Lager-Geräusche, wird zeitweise oder periodisch oder permanent in mindestens einem IT- und Elektroniksystem gespeichert, sodass sich dort ein Zustandsmodell über den jeweils aktuellen Geräusch-Zustand, als auch über vergangene/ vorherige Geräusch-Zustände, abbilden lässt.

Gleiches gilt für die nebengeordnete Sensorik: Die mittels nebengeordneter Sensorik zeitweise, periodisch oder gar permanent aufgenommenen/ erfassten IST-Werte oder IST-Daten der Betriebszustände werden stets, im Idealfall sogar kontinuierlich, mit SOLL-Werten oder SOLL-Daten dieser Betriebszustände abgeglichen. Diese SOLL-Werte oder SOLL-Daten können entweder in mindestens einem hochentwickelten IT- und Elektroniksystem abgelegt oder gespeichert sein, oder aber auch im oben beschriebenen Kontroll- oder Zentralrechner, vorzugsweise jedoch in der Auswerteeinheit. Auch eine redundante Speicherung der Daten ist denkbar und im Sinne der Erfindung.

In einer vorteilhaftesten Ausgestaltung der Erfindung sind jedoch die SOLL-Werte oder SOLL-Daten direkt, ggfs. redundant, im Speicher von intelligenten Kontaktsensoren abgelegt.

Sobald, und jedes Mal, wenn eine vorhandene Differenz aufgenommenen bzw. erfassten IST-Werten bzw. IST-Daten hinsichtlich Temperatur,- und/ oder Druck-, und/oder Drehzahl-, und/oder Beschleunigungs-, und/ oder Geschwindigkeits- und/ oder Schmiermittelzustand und den entsprechenden SOLL-Werten bzw. SOLL-Daten eine gewisse Schwelle, den jeweiligen festgelegten Grenzwert, überschreitet, wird unter Zuhilfenahme der erfindungsgemäßen Wissensdatenbank eine oder mehrere Entscheidungen über den aktuellen Geräusch-Zustand des überwachten Lagers getroffen.

Dieser aktuelle Betriebszustand, also alle jeweiligen IST-Werte bzw. IST-Daten der momentan aufgenommenen/ erfassten Betriebszustände, wird zeitweise oder periodisch oder permanent in mindestens einem IT- und Elektroniksystem gespeichert, sodass sich dort ein Zustandsmodell über den jeweils aktuellen Geräusch-Zustand, als auch über vergangene/ vorherige Geräusch-Zustände, abbilden lässt.

Diese Wissensdatenbank, alternativ das hochentwickelte IT- und Elektroniksystem oder gar der Zentral- oder Kontrollrechner, vorzugsweise aber die mindestens eine Auswerteeinheit, in der weiterführenden Ausgestaltung der Erfindung gar ein intelligenter Sensor selbst, führt stets eine Gegenüberstellung, einen sogenannten Vergleich oder Abgleich, von aufgenommenen/ erfassten IST-Daten bzw. IST-Werten mit gespeicherten SOLL-Daten bzw. SOLL-Werten durch.

Die Gegenüberstellung von IST- mit SOLL- wird dient der Bildung von Signal-, Daten-, bzw. Wertedifferenzen. Diese Differenzenbildung erfolgt beispielsweise als interne Rechenoperation. Die derart ver- oder abgeglichenen Werte oder Daten, also die gebildeten Werte- bzw. Datendifferenzen, sind als Vergleichs- oder Abgleichsdaten - oder 'Differenzdaten' zu verstehen und werden im Rahmen dieser Beschreibung als DIFF-Werte oder DIFF-Daten bezeichnet.

Diese Differenzbildung genügt beispielsweise dem folgenden Zusammenhang:

$$DIFF_i = IST_i - SOLL_i \ , \ bzw: \ -DIFF_i = SOLL_i - IST_i \ ,$$

$$alternativ: \ |DIFF_i| = |IST_i| - |SOLL_i| = |SOLL_i| - |IST_i|$$

Die jeweiligen festgelegten Grenzwerte, sowohl hinsichtlich der Lager-Geräusche als auch hinsichtlich der Betriebszustände, der zu überwachenden Bauteile oder Komponenten, beispielsweise des zu überwachenden Lagers oder der zu überwachenden Drehverbindung, sind als Grenz- oder Schwellendaten bzw. Grenz- oder Schwellenwerte, im Rahmen dieser Beschreibung bezeichnet als THRESHOLD-Daten oder THRESHOLD-Werte, zu verstehen.

Analog zur Bezeichung 'Grenzwert' ist in dieser Beschreibung der Begriff ,Schwellenwert' oder ,Schwellwert' zu verstehen. Grenz- oder Schwellenwerte bzw. Grenz- oder Schwellendaten sind jeweils Erfahrungsdaten, welche vorzugsweise in der Wissensbasis oder Wissensdatenbank gespeichert oder abgelegt sind und Aussagen über zulässige Höchstzustandswerte, beispielsweise höchstzulässige Frequenz aber auch höchstzulässige Temperatur, höchstzulässige Beschleunigung, höchstzulässiger Druck, höchstzulässige Spannung, höchstzulässige Drehzahl, etc. beinhalten.

Zur Abgrenzung: Erfahrungsdaten, also THRESHOLD-Daten oder THRESHOLD-Werte, können sich beispielsweise von vordefinierten Kennfelder und Betriebsmustern - den sogenannten WISSENS-Daten oder WISSENS-Werte - dadurch unterscheiden, dass WISSENS-Daten oder WISSENS-Werte eine Vielzahl von THRESHOLD-Daten oder THRESHOLD-Werten aufweisen. Insbesondere bilden WISSENS-Daten oder WISSENS-Werte eine Folge oder Funktion von je mehreren THRESHOLD-Daten oder THRESHOLD-Werten ab.

Diese THRESHOLD-Daten oder THRESHOLD-Werte können in einer weiteren Ausgestaltung der Erfindung im hochentwickelten IT- und Elektroniksystem abgelegt oder gespeichert sein, oder sogar im oben beschriebenen Kontroll- oder Zentralrechner. Auch eine redundante Speicherung von THRESHOLD-Daten oder THRESHOLD-Werten ist denkbar, beispielsweise die zeitweise Speicherung oder Zwischenspeicherung in einer oder mehreren Auswerteeinheiten. In der vorteilhaftesten Ausgestaltung der Erfindung jedoch sind THRESHOLD-Daten oder THRESHOLD-Werte stets in der Wissensdatenbank oder im hochentwickelten IT- und Elektroniksystem abgelegt oder gespeichert und können zeitweise (temporär) in einer Auswerteeinheit oder mehreren Auswerteeinheiten zwischengespeichert , bzw. ausgelagert, werden.

In einer weiterführenden Ausgestaltung der Erfindung kann gar ein intelligenter Sensor selbst Auch eine Speicherung von THRESHOLD-Daten oder THRESHOLD-Werten übernehmen.

Höchstzulässige Grenz- oder Schwellwerte der zu überwachenden Bauteile oder Komponenten, beispielsweise des zu überwachenden Lagers oder der zu überwachenden Drehverbindung, sind überschritten, sobald beispielsweise gilt:

$$|\ \text{THRESHOLD}_i\ |\ <\ |\ \text{DIFF}_i\ |\ ==\ \text{TRUE}$$

Höchstzulässige Grenz- oder Schwellwerte der zu überwachenden Bauteile oder Komponenten, beispielsweise des zu überwachenden Lagers oder der zu überwachenden Drehverbindung, sind hingegen unterschritten, sobald diese beispielhafte Vergleichsvorschrift gilt:

$$|\text{THRESHOLD}_i\ |\ >\ |\ \text{DIFF}_i\ |\ ==\ \text{TRUE}$$

Diese Überwachung der zulässigen Schwell- oder Grenzwerte, also die Überwachung der beiden soeben genannten Vorschriften nach der Arithmetik der beschriebenen wahr/falsch - Vergleichsvorschriften, wird zeitweise, periodisch, oder gar permanent zumindest in mindestens einer Auswerteeinheit und/ oder im hochentwickelten IT- und Elektroniksystem durchgeführt. Dies erfolgt beispielsweise als interne Rechenoperation. Alternativ wird diese Überwachung der zulässigen Grenzwerte ebenso oder redundant in mindestens einem Zentral- oder Kontrollrechner, ggfs. in einem entfernten Kontrollzentrum, durchgeführt.

In einer weiterführenden Ausgestaltung der Erfindung kann gar ein intelligente Sensor selbst die oben genannte Überwachung der zulässigen Schwell- oder Grenzwerte übernehmen. Diese Überwachung der zulässigen Schwell- oder Grenzwerte, also die Überwachung der beiden soeben genannten Vorschriften nach der Arithmetik des beschriebenen wahr/falsch - Vergleichs, wird jedenfalls periodisch oder permanent zumindest in einer Auswerteeinheit und/ oder im hochentwickelten IT- und Elektroniksystem gespeichert, sodass sich dort ein Zustandsmodell über den jeweils aktuellen Grenzwertzustand, als auch über vergangene/vorherige Grenzwertzustände, abbilden lässt.

Führt die Arithmetik des beschriebenen wahr/falsch - Vergleichs zu festgestellten Überschreitungen des jeweils zulässigen Grenzwertes, so wird, vorzugsweise in jeder Einheit in der dieser wahr/falsch - Vergleich durchgeführt wird, ein dafür zuständiger interner Zählmechanismus inkrementiert.

Diese Rechenoperation des Inkrementierens genügt beispielsweise der folgenden Vorschrift:

$$\text{IF}\ |\text{THRESHOLD}_i\ |\ <\ |\ \text{DIFF}_i\ |\ ==\ \text{TRUE}\ ,\qquad \text{THEN}\ k = k+1$$

alternativ: IF $|\text{DIFF}_i|1>|\text{THRESHOLD}_i|$ == TRUE , THEN k = k+1

Beispielsweise zusätzlich, oder alternative, kann eine Überwachung der Schwell- oder Grenzwerte auf Unterschreitungen erfolgen. Führt die Arithmetik dieses wahr/falsch - Vergleichs zu festgestellten Unterschreitungen des jeweils zulässigen Grenzwertes, so wird ebenfalls ein dafür zuständiger interner Zählmechanismus inkrementiert.

Es hat sich als vorteilhaft herausgestellt, für die Unterschreitungen des jeweiligen Schwell-Genzwertes einen anderen Zähler zu verwenden als für die Überschreitungen des jeweils zulässigen Grenzwertes. Diese Rechenoperation des Inkrementierens genügt beispielsweise der folgenden Vorschrift:

$$\text{IF}\ |\text{THRESHOLD}_i\ |\ >\ |\ \text{DIFF}_i\ |\ ==\ \text{TRUE}\ ,\qquad \text{THEN}\ m = m+1$$

alternativ: IF$|\text{DIFF}_i|<|\text{THRESHOLD}_i|$==TRUE, THEN m = m+1

Erkannte Überschreitungen des jeweils zulässigen Schwell- oder Grenzwertes und/ oder wahlweise zusätzlich oder alternativ auch Unterschreitungen des jeweils zulässigen Schwell - oder Grenzwertes können somit stets vom erfindungsgemäßen System erkannt, gegebenenfalls weitergemeldet und/ oder weiterverarbeitet, in jedem Fall aber gespeichert und hinsichtlich der Auftretenshäufigkeit nachgehalten werden. In einer besonders vorteilhaften Ausgestaltungsform der Erfindung werden sämtliche erkannte Überschreitungen des jeweils zulässigen Schwell- oder Grenzwertes, wahlweise zusätzlich oder alternativ auch Unterschreitungen des jeweils zulässigen Grenzwertes, in der Wissensdatenbank, welches vorzugsweise in einer vorteilhaften Ausgestaltung der Erfindung in mindestens einem (hochentwickelten) IT- und Elektroniksystem enthalten ist, gespeichert.

Alle der dieser Schwell- oder Grenzwertüberwachung sequentiell nachfolgenden Rechenoperationen werden vorzugsweise zumindest in dieser Wissensdatenbank oder zumindest in diesem hochentwickelten IT- und Elektroniksystem durchgeführt.

Dabei gilt: Eine oder mehrere erkannte Überschreitungen (wahlweise oder alternativ: Unterschreitungen) des jeweils zulässigen Schwell,- bzw. Grenzwertes können in einer besonders vorteilhaften Ausgestaltung der Erfindung eine automatisierte Nachricht oder Meldung an den Kontroll- oder Zentralrechner initiieren, welcher beispielsweise in einem entfernten Kontrollzentrum stehen kann. Vorzugsweise jedoch ergeht diese automatisierte Nachricht oder Meldung an mindestens eine Software- Applikation- oder Anwendung, welche in dem oder von dem erfindungsgemäßen Zustandserkennungs- und Zustandsüberwachungs - System betrieben wird.

In einer grundlegenden Ausgestaltung der Erfindung wird diese Nachricht oder Meldung über ein Netzwerk, zum Beispiel wie etwa ein lokales Netzwerk, etwa über LIN-, MOST-, Ethernet-Profi-, FleyRay-, Bus, oder grundsätzlich via ein Netzwerk auf Basis des IEEE 802 Standards, übermittelt.

Alternativ beziehungsweise vorzugsweise erfolgt diese Nachrichtenübermittlung drahtlos, etwa via WLAN, Bluetooth, SMS-Nachricht, Mobilfunknachricht, et cetera.

Diese automatisierte Nachricht oder Meldung kann vorzugsweise und vom Systembetreiber wahlweise einstellbar, je nach vorhandenen Bushardware oder nach vorhandenem Kommunikationssystem, als drahtlose oder drahtgebundene Email-Nachricht, als Sprachnachricht, als drahtlose Nachricht, oder auch als busgebundene Datenfeld-Nachricht erfolgen. Grundsätzlich sind auch Fax-Nachnachrichtenübermittlungen denkbar und im Sinne der Erfindung.

Überschreitet die Anzahl der erkannten Überschreitungen des jeweils zulässigen Schwell- bzw. Grenzwertes ($\Sigma|k|$) gar eine spezifische kritische Anzahl ($n_{-krit}$), so ergeht entsprechend dem Erfindungsgedanken eine separate Wamungs-Datennachricht, im Rahmen der Beschreibung nachfolgend bezeichnet als sogenannte 'MESSAGE/DATA_ALERT' -Nachricht, an einen Kontroll- oder Zentralrechner, welcher beispielsweise in einem entfernten Kontrollzentrum stehen kann.

Selbiges gilt analog für den Fall von Unterschreitungen des jeweils zulässigen Schwell- bzw. Grenzwertes ($\Sigma|m|$) gar eine spezifische kritische Anzahl ($p_{-krit}$), so ergeht entsprechend dem Erfindungsgedanken eine separate Warnungs-Datennachricht, im Rahmen der Beschreibung nachfolgend bezeichnet als sogenannte ‚MESSAGE/DATA_ALERT' - Nachricht, an diesen Kontroll- oder Zentralrechner.

Diese separate Warnungs-Datennachricht kann auch, gegebenenfalls in früheren ersten Verfahrensschritt ausschließlich, intern innerhalb des hochentwickelten IT- und Elektroniksystems übermittelt werden, beispielsweise um eine Bewertung oder Gewichtung oder Zustandsanalyse in Gang zu setzen. In jedem Fall werden diese separaten Warnungs-Datennachrichten in einem dafür vorgesehenen Speicherbereich gespeichert, und ggfs. für Dokumentations- und Aufzeichnungszwecke nachgehalten. In einer besonders vorteilhaften Ausgestaltung der Erfindung ergeht diese separate Warnungs-Datennachricht ebenso, gegebenenfalls zusätzlich, an mindestens ein bewegliches Funksystem, beispielsweise an mindestens ein tragbares Funksystem, beispielsweise an mindestens ein Funk- oder Mobiltelefon.

Die im vorgenannten Abschnitt beschriebene Routine oder Operation wird im Sinne der Erfindung im hochentwickelten IT- und Elektroniksystem durchgeführt, alternativ oder in einem weiteren Verfahrensschritt auch (nochmals) in dem Kontroll- oder Zentralrechner. Diese Rechenoperation, welche diese separate Wamungs-Datennachricht initiiert, genügt jedenfalls beispielsweise der folgenden Vorschrift:

$$\text{IF } \Sigma\,|k\,| > n_{-krit}\,,\ \text{THEN}\ \ \text{MESSAGE/DATA\_ALERT}$$

beziehungsweise analog:

$$\text{IF } \Sigma\,|m\,| > p_{-krit}\,,\ \text{THEN}\ \ \text{MESSAGE/DATA\_ALERT}$$

Eine solche oder ähnliche separate Wamungs-Datennachricht wird gemäß der vorliegenden Erfindung ebenfalls und unabhängig von der oben beschriebenen tatsächlichen Anzahl festgestellter Schwellen,- bzw. Grenzwert- Überschreitungen oder Unterschreitungen ebenfalls dann initiiert, wenn die zeitliche Auftretensreihenfolge von Über- oder Unterschreitungen des jeweils zulässigen Schwellen,- bzw. Grenzwertes einem als komponenten - oder bauteilschädigend bekannten Betriebsmuster, dem sog. SAMPLE$_{-krit}$, entspricht.

Zur Erinnerung bzw. Klarstellung:

- Erfahrungsdaten, also THRESHOLD-Daten oder THRESHOLD-Werte, können sich beispielsweise von vordefinierten Kennfelder und Betriebsmustem - den sogenannten WISSENS-Daten oder WISSENS-Werte - dadurch unterscheiden, dass WISSENS-Daten oder WISSENS-Werte eine Vielzahl von THRESHOLD-Daten oder THRESHOLD-Werten aufweisen. Insbesondere bilden WISSENS-Daten oder WISSENS-Werte eine Folge oder Funktion von je mehreren THRESHOLD-Daten oder THRESHOLD-Werten ab.

- In einer erfindungsgemäßen Ausgestaltung der Wissensdatenbank weist selbige diese WISSENS-Daten oder WISSENS-Werte auf. Diese sind Folgen oder Funktionen von ,als komponenten- oder bauteilschädigend bekannter Betriebsmuster'.

Eine Mehrheit, im Idealfalle sogar eine Vielzahl dieser ,als komponenten- oder bauteilschädigend bekannten Betriebsmuster', vorzugsweise bis zu vierzig - oder mehr als vierzig - dieser ,als komponenten- oder bauteilschädigend bekannten Betriebsmuster' sind erfindungsgemäß in der Wissensdatenbank gespeichert.

Die Bewertung der zeitlichen Auftretensreihenfolge von erkannten Über- oder Unterschreitungen des jeweils zulässigen Schwellen,- bzw. Grenzwertes ist im Sinne der Erfindung abhängig von der Anzahl und Qualität/ Güte der in der Wissensdatenbank gespeicherten WISSENS-Daten oder WISSENS-Werte, also abhängig von der Anzahl und Qualität/ Güte der Kennfelder und bekannten Betriebsmuster, insbesondere abhängig von der Anzahl und Qualität/ Güte der in der Wissensdatenbank gespeicherten ,als komponenten- oder bauteilschädigend bekannten Betriebsmuster'.

Folglich gilt, dass nicht nur bei der Überschreitung der spezifischen kritischen Anzahl ($n_{\_krit}$) an erkannten Grenzwertüberschreitungen eine separate Warnungs-Datennachricht, eine sogenannte MESSAGE/DATA_ALERT, ergeht - sondern auch dann wenn die zeitliche Auftretensreihenfolge ($F_{()}$) oder die zeitliche Auftretenssequenz,

beispielsweise im vorliegenden Kontext bezeichnet als: ($F \{|THRESHOLD_i|\}$) mehrerer erkannter Über- oder Unterschreitungen eines zulässigen Schwellen,- bzw. Grenzwertes einem ,als komponenten- oder bauteilschädigend bekannten Betriebsmuster' entspricht. Auch dann ergeht eine separate Warnungs-Datennachricht, eine sogenannte MESSAGE/DATA_ALERT.

Auch hier gilt beispielsweise, dass diese separate Warnungs-Datennachricht zunächst ausschließlich intern innerhalb des hochentwickelten IT- und Elektroniksystems übermittelt wird, beispielsweise um eine Bewertung oder Gewichtung oder Zustandsanalyse in Gang zu setzen. In jedem Fall werden auch hier diese separaten Warnungs-Datennachrichten in einem dafür vorgesehenen Speicherbereich gespeichert, und ggfs. für Dokumentations- und Aufzeichungszwecke nachgehalten. In einer besonders vorteilhaften Ausgestaltung der Erfindung ergeht diese separate Warnungs-Datennachricht ebenso, gegebenenfalls zusätzlich, an mindestens ein bewegliches Funksystem, beispielsweise an mindestens ein tragbares Funksystem, beispielsweise an mindestens ein Funk- oder Mobiltelefon.

In einer sehr spezialisierten Ausgestaltung des Zustandserkennungs- und Zustandsüberwachungs-Systems können alle ergehenden MESSAGE/DATA_ALERT Nachrichten oder Meldungen auch chiffriert oder kodiert versendet werden, sodass nur entsprechende Empfangsstationen, welche die Dechiffrierungs-Schlüssel oder die Dekodierungs-Schlüssel kennen, die MESSAGE/DATA_ALERT Nachrichten oder Meldungen empfangen und dekodieren oder interpretieren können.

In einer noch weiter entfernten Ausgestaltung der Erfindung des Zustandserkennungs- und Zustandsüberwachungs-Systems können alle ergehenden MESSAGE/DATA_ALERT Nachrichten oder Meldungen auch sogenannten WEB 2.0 Media Network kompatibel gestaltet sein, sodass entsprechende WEB 2.0 Empfangsstationen die MESSAGE/ DATA_ALERT Nachrichten oder Meldungen empfangen und dekodieren oder interpretieren können.

Diese Rechenoperation, welche diese separate Warnungs-Datennachricht, den sogenannten MESSAGE/ DATA_ALERT, initiiert, genügt beispielsweise der folgenden Vorschrift:

$$\text{IF } F\{|THRESHOLD_i|\} == SAMPLE_{\_krit}, \text{ THEN } MESSAGE/DATA\_ALERT.$$

In einer zukünftigen Ausgestaltung der Erfindung wird es möglich sein, dass die Anzahl und Qualität/ Güte der in der Wissensdatenbank gespeicherten ,als komponenten- oder bauteilschädigend bekannte Betriebsmuster' einem Selbstlernprozess unterliegt. Dies bedeutet, dass infolge weiterführender Rechenoperationen innerhalb des Kontroll- oder Zentralrechners oder innerhalb des (hochentwickelten) IT- und Elektroniksystems, die Anzahl und Qualität/ Güte der in der Wissensdatenbank gespeicherten WISSENS-Daten oder WISSENS-Werte, also auch die Anzahl und Qualität/ Güte der ,als komponenten- oder bauteilschädigend bekannte Betriebsmuster', Zug um Zug oder kontinuierlich und verbessert erhöht wird.

Fernziel dieser besonders vorteilhaften zukünftigen Ausgestaltung der Erfindung ist die Schaffung einer selbstlemenden und selbstoptimierenden Wissensbasis, welche die ,als komponenten- oder bauteilschädigend bekannten Betriebsmuster' kontinuierlich verbessert, gegebenenfalls nachschärft, und eigenständig in Anzahl und Qualität/ Güte erhöht.

Im Folgenden wird die Funktionsweise des erfindungsgemäße Zustandserkennungs- und Zustandüberwachungs - System anhand des Beispiels eines Windenergie-Hauptlager nochmals kurz beschrieben. In der weiteren Beschreibung wird dabei das oben benannte ‚als komponenten- oder bauteilschädigend bekanntes Betriebsmuster' bezeichnet als ein in der Wissensdatenbank gespeicherten Geräuschs- oder Geräuschmuster SAMPLE$_{krit\ i}$.

**Bezugzeichenliste:**

| K | Lager oder Drehverbindung / Baugruppe oder Komponente | | 100 | Zustandserkennungs- und Zustandüberwachungs- System |
|---|---|---|---|---|
| 80 | Zentral- oder Kontrollrechner | | A | An- oder Einbringungsort für Kontaktsensor |
| 50 | IT- und Elektroniksystem | | B | An- oder Einbringungsort für nebengeordneten Sensor |
| WB | Wissensdatenbank | | E | Auswerteeinheit oder Auswertemodul |
| L | Leitungsverbindung: Diskrete Leitung / Netzwerkleitung / Busleitung | | LW | Drahtlosverbindung: Bluetooth- Verbindung / WLAN-Verbindung / Funkverbindung |
| F/V | Verstärkung oder Filterung | | 60 | Filter- oder Verstärkermodul |
| 1 | Fläche oder Kontur | | 2 | Geräusch/ Schall/ mechan. Welle |
| 3 | Kontaktsensor/ Kontaktsensorik | | 4 | Signal/ Datum/ Wert |
| 5 | Signal/ Datum/ Wert | | 6 | Mikrokontroller |
| 7 | Membran | | 8 | Elektrode |
| 9 | Piezoelektisches Element | | 10 | Permanentmagnet/ Eisen |
| 11 | Induktives Element , Spule | | 12 | Spannungsversorgung |
| 13 | Widerstand/ Netzwerk | | 14 | Signal/ Datum/ Wert |
| 15 | Mikroprozessor | | 16 | Steuerwerk |
| 17 | Rechenwerk | | 18 | Speicher |
| 19 | Schnittstelle | | 20 | Nebensensor/ Nebensensorik |
| 21 | Gehäuse | | 22 | Schnittstelle |
| 23 | Schnittstelle | | 24 | Schnittstelle |
| 25 | Bussystem/ Systembus | | 26 | Gehäuse |

Es wird durch das erfindungsgemäße Zustandserkennungs- und Zustandüberwachungs - System (100), insbesondere aufgrund der oben beschriebenen Verfahrensschritt oder Routinen, beispielsweise ein an einer internen Stelle in einem Windenergie-Hauptlager vorhandener Lagerschaden, wie etwa eine Lagerfraß-Vertiefung oder ein Kantenausbruch, erkannt, da dieser Schaden ein zyklisches oder periodisch wiederkehrendes, oder sogar ein kontinuierliches Störgeräusch in der Laufruhe dieses Windenergie-Hauptlagers verursachen wird, welches durch die Kontaktsensorik erfasst/ aufgenommen wird.

Entsprechend dem erfindungsgemäßen Verfahren wird dieses Geräusch, sobald es die jeweiligen höchstzulässigen Grenzwerte überschreitet, von beispielsweise der Auswerteeinheit erkannt und intern, also beispielsweise im hochentwickelten IT- und Elektroniksystem weitergeleitet.

Es ergeht die oben beschriebene separate Warnungs-Datennachricht, sobald eine Anzahl der jeweiligen höchstzulässigen Grenzwertüberschreitungen eine kritische Anzahl annimmt - oder sobald die zeitliche dieser mehreren erkannten Grenzwertüberschreitungen einem ‚als komponenten- oder bauteilschädigend bekannten Betriebsmuster' oder einem SAMPLE$_{krit\ i}$ entspricht.

Um erkennen zu können, wann im Betrieb des beispielhaft genannten Windenergie-Hauptlager ein ‚als komponenten- oder bauteilschädigend bekanntes Betriebsmuster' vorliegt, erfolgt zumindest periodisch oder bestenfalls sogar permanent ein Vergleich oder Abgleich der, tatsächlich vorliegenden, IST-Zustände mit den, im jeweiligen Speicher abrufbaren, SOLL-Zuständen.

Durch die periodische oder permanente Erfassung der Lagergeräusche mittels der an diesem beispielhaft benannten Windenergie-Hauptlager angebrachten Kontaktsensorik und der folgenden Überprüfung dieser Geräusche auf Grenzwertüber- oder Unterschreitung, kann das erfindungsgemäße System eine Übereinstimmung mit dem tatsächlich erfassten/aufgenommenen Geräuschs- bzw. Geräuschmuster und dem in der Wissensdatenbank gespeicherten Geräuschs- bzw. Geräuschmusters SAMPLE$_{krit}$ feststellen, dass eine Lagerfraß-Vertiefung oder ein Kantenausbruch vorliegt. Eine entsprechende separate Warnungs-Datennachricht wird unmittelbar nach dieser Erkennung an die zuständige Stelle, beispielsweise das entfernte Kontrollzentrum, übermittelt.

Die datentechnische Verarbeitung erkannter Überschreitungen kann dabei über DFÜ (Datenfernübertragung) via Funk, WLAN, UMTS oder Mobilfunkstrecke, lokales Netzwerk, LAN), Ethemet-Bussystem, Profibus-, TCP/ IP, et cetera ... erfolgen.

So können beispielsweise die Zustände der überwachten Komponenten einer Windenergieanlage auch aus einem (über weit entfernte Strecken) fern gelegenen Kontrollzentrum, in welchem beispielsweise der oben genannte Kontroll- oder Zentralrechner aufgebaut ist, beobachtet werden.

Datenanalysen hinsichtlich vergangene/ vorherige Geräusch-Zustände, oder auch vergangene/ vorherige Grenzwert-Zustände, oder auch vergangene/ vorherige Betriebszustände können somit stets über ein, eventuell über weit entfernte Strecken fern gelegenes, Kontrollzentrum vorgenommen und durchgeführt werden.

Die jeweilige Entscheidung, ob ein erkanntes ‚als komponenten- oder bauteilschädigend bekanntes Betriebsmuster' tatsächlich der Praxis wahrheitsgemäß gegeben ist, kann in den anfänglichen Ausprägungsstufen der Erfindung mit einer gewissen Wahrscheinlichkeit getroffen werden.

Die letztendliche Entscheidung, ob ein ‚i.O.-LAGER', vorliegt, oder ob ein ‚n.i.O.-LAGER', vorliegt, erfolgt demnach eine kann anhand einer (statistischen) Wahrscheinlichkeits-Aussage, welche im hochentwickelten IT- und Elektroniksystem berechnet wird, unter Zugriff auf die der Erfindung entsprechenden Wissensdatenbank.

Besondere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Dabei zeigen:

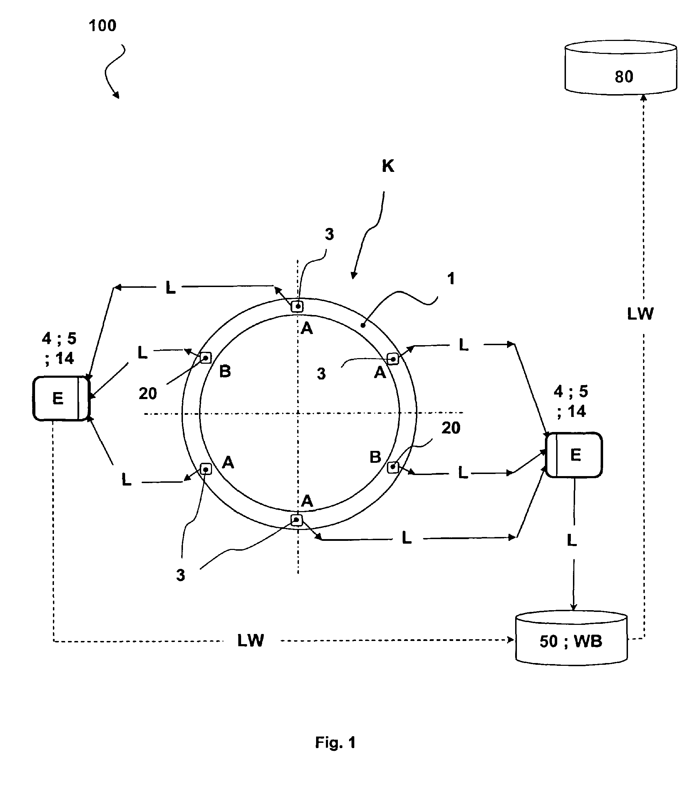

Fig. 1 eine beispielhafte Ausgestaltung des Zustandserkennungs- und Zustandüberwachungs- Systems, aufzeigend ein überwachtes Lager oder eine überwachte Drehverbindung, wobei vier Kontaktsensoren und zwei Nebensensoren angebracht sind, in schematischer Darstellung, aufweisend zwei Auswerteeinheiten, welche mit einem IT-System (welches die Wissensbasis beinhaltet) verbunden ist. Dieses IT-System ist mit einem entfernten Zentral- oder Kontrollrechner drahtlos verbunden.

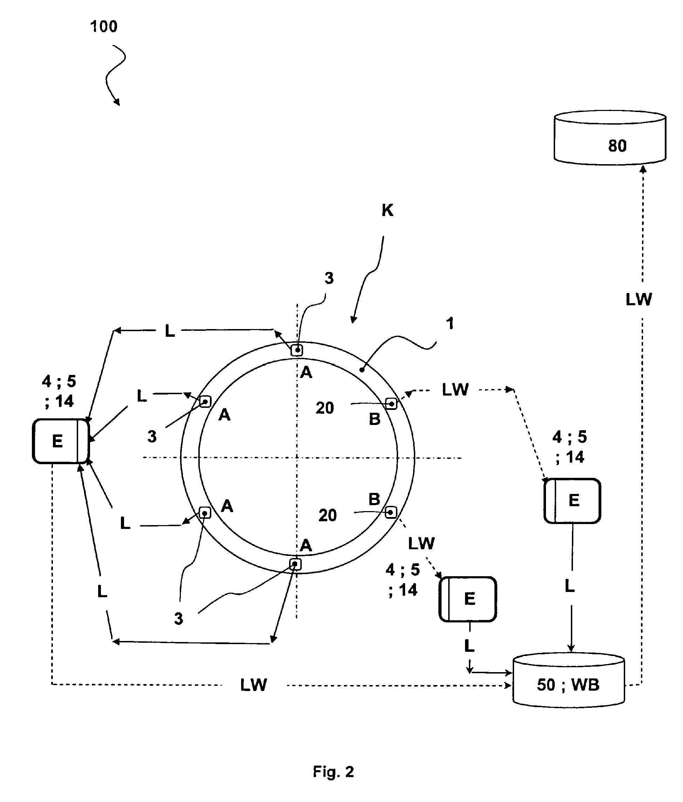

Fig. 2 eine beispielhafte Ausgestaltung des Zustandserkennungs- und Zustandüberwachungs- Systems, aufzeigend ein überwachtes Lager oder eine überwachte Drehverbindung, wobei vier Kontaktsensoren und zwei Nebensensoren angebracht sind, in schematischer Darstellung, aufweisend drei Auswerteeinheiten, welche einem IT-System (welches die Wissensbasis beinhaltet) verbunden ist. Dieses IT-System ist mit einem entfernten Zentral- oder Kontrollrechner drahtlos verbunden.

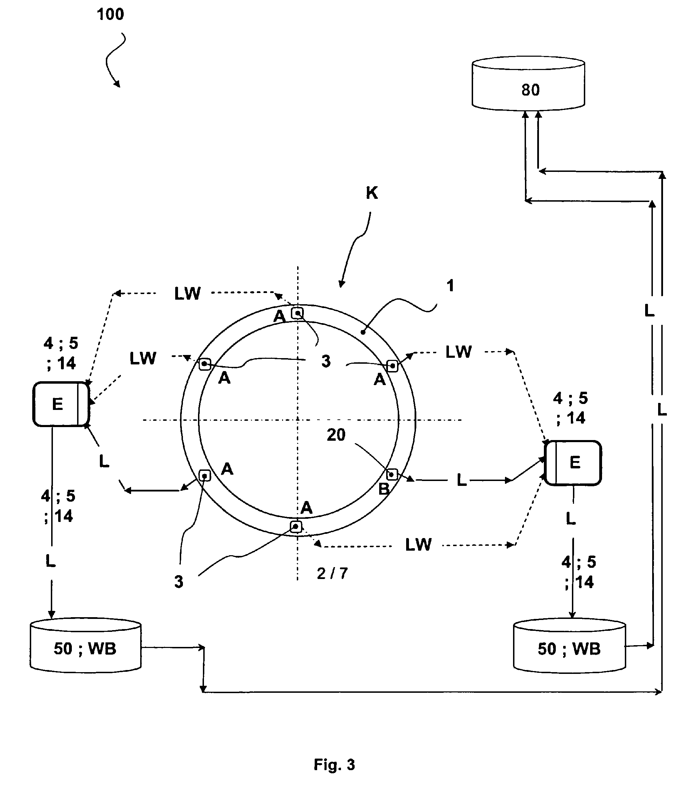

Fig. 3 eine beispielhafte Ausgestaltung des Zustandserkennungs- und Zustandüberwachungs- Systems, aufzeigend ein überwachtes Lager oder eine überwachte Drehverbindung, wobei fünf Kontaktsensoren und ein Nebensensor angebracht sind, in schematischer Darstellung, aufweisend zwei Auswerteeinheiten, welche mit je einem IT-System (welches die Wissensbasis beinhaltet) verbunden ist. Jedes dieser IT-Systeme ist mit einem entfernten Zentral- oder Kontrollrechner drahtgebunden verbunden.

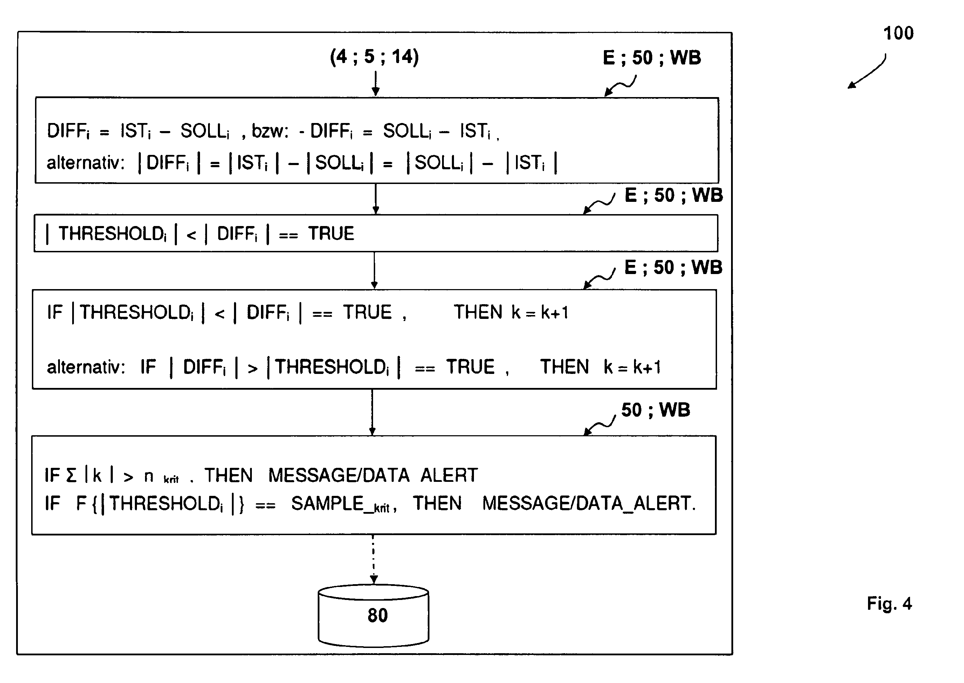

Fig. 4 einen beispielhaften Ablauf des Verfahrens zur Erkennung und Überwachung eines Lager oder einer Drehverbindung, darstellend die Messwerterfassung und Defferenzbildung, den Schwellwertvergleich, die Zählerinkrementierung bei Schwellwertüberschreitung, und ebenso die Generierung von Wammeldungen und Übermittlung dieser Wammeldungen an den Zentral- oder Kontrollrechner.

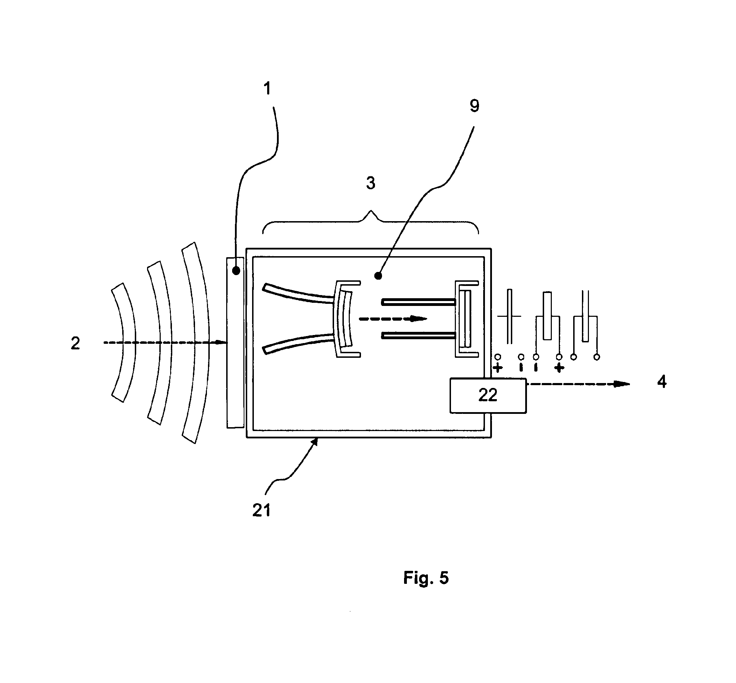

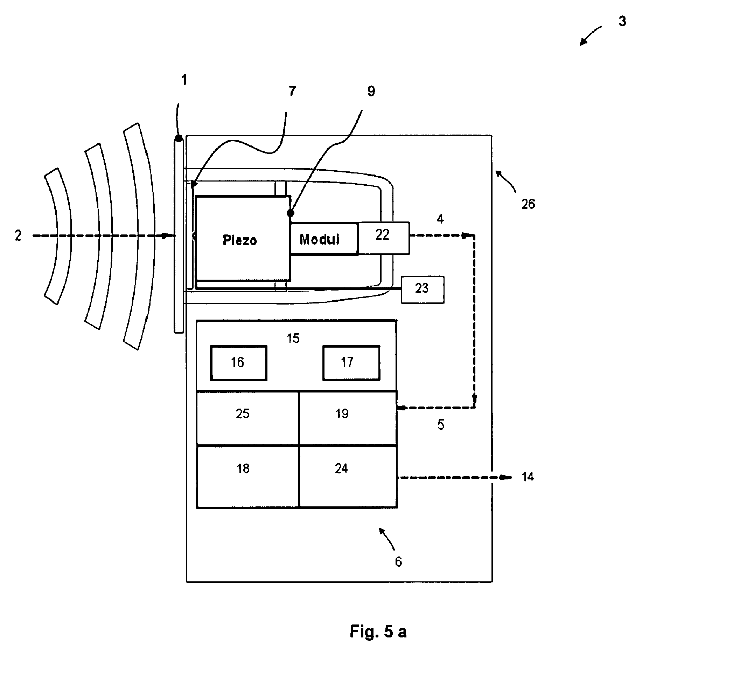

Fig. 5 beispielhaft einen Kontaktsensor nach piezoelektrischem Prinzip, welcher auf die Fläche der zu überwachenden Baugruppe oder Komponente aufgebracht ist, kennzeichnende die mechanische Änderung innerhalb des Piezokems, sowie das Prinzip der elektrischen Signalgenerierung.

Fig. 5a beispielhaft einen weiteren Kontaktsensor nach piezoelektrischem Prinzip, jedoch als intelligenter Sensor, d.h. mit angeschlossenem Mikrokontroller und zugehörigen Bausteinen (Schnittstellen, Rechenwerk, Steuerwerk, Gehäuse, etc.)

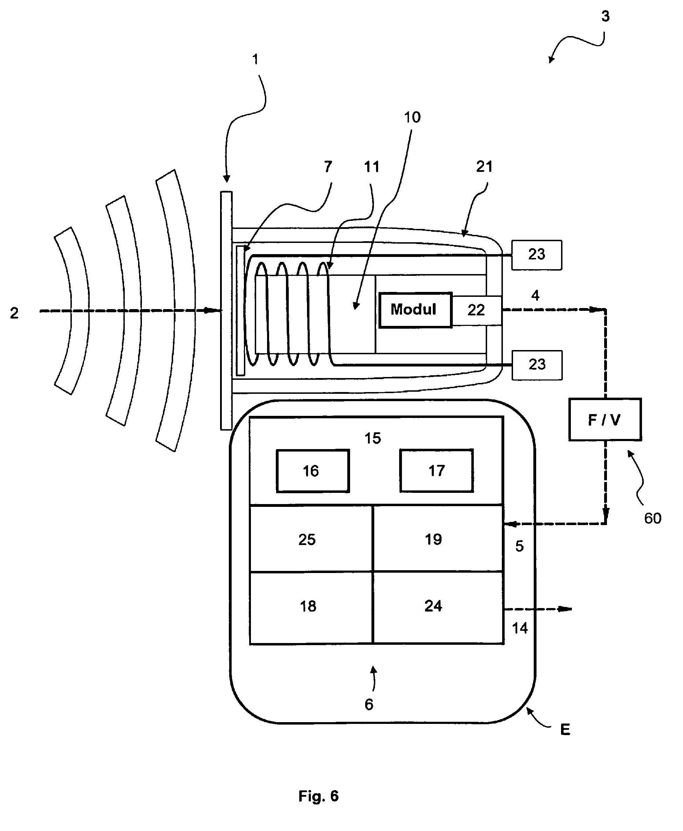

Fig. 6 beispielhaft einen Kontaktsensor nach induktivem Prinzip, hier als intelligenter Sensor, d.h. mit angeschlossenem Mikrokontroller und zugehörigen Bausteinen (Schnittstellen, Rechenwerk, Steuerwerk, Gehäuse, etc.) des weiteren aufweisend ein Verstärkungs- und ggfs. Filterungsmodul.

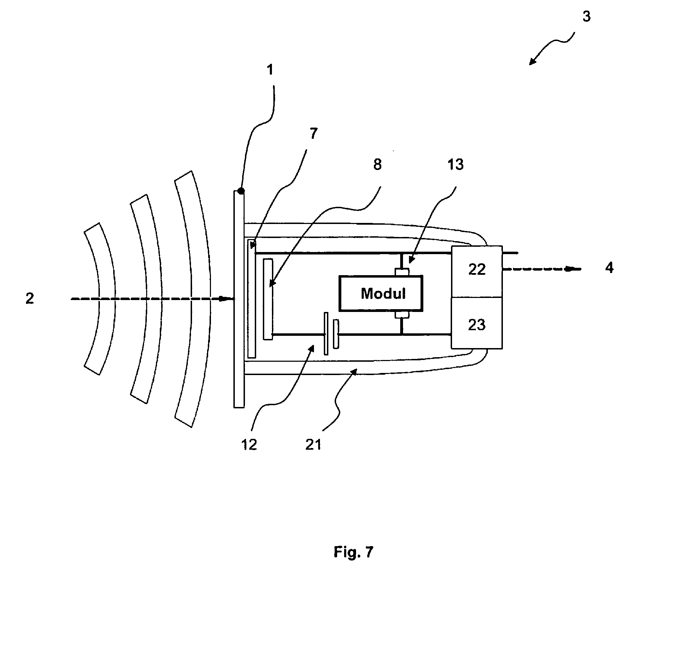

Fig. 7 beispielhaft einen Kontaktsensor nach kapazitiven Prinzip.

Im Folgenden wird noch der erfindungsgemäße Systemaufbau in unmittelbarer Nähe des zu überwachenden Bauteiles, beispielsweise des Windenergie-Hauptlagers (K), beschrieben:
Fig. 1 mit Fig.3 zeigen das Zustandserkennungs- und Zustandsüberwachungs- System (100) zur mindestens zeitweisen, gegebenenfalls periodischen, vorzugsweise sogar permanenten, (werte-, signal- oder datentechnischen) Erfassung und Überwachung von Zustandsparametern mindestens einer Baugruppe (K) oder Komponente, oder gar von Teilelementen dieser Baugruppe oder Komponente, insbesondere mindestens eines Lagers oder einer Drehverbindung, beispielsweise in oder an einer Windkraftanlage, mit vier an diese Baugruppe oder Komponente (K) angebrachten oder eingebrachten Kontaktsensoren (3), welche unmittelbar je an oder in einem Einbringungsort (A) eingebracht sind.
Die Fig. 1 und Fig. 2 zeigen beispielsweise vier dieser Orte (A) an einer ebenen oder gerundeten Fläche (1) oder Kontur des Lagers (K). Zweckmäßigerweise sind diese Sensoren (3) einbringbar mittels Schraubung/ Steckung/ Schweißung/ Lötung/ Klebung oder Klemmung eventuell an Nasenring oder Tragring oder Haltering des Lagers. In Fig. 3 sind fünf dieser Orte (A), jeweils beherbergend einen Kontaktsensor (3), dargestellt.
Nicht dargestellt in den Figuren, aber erwähnenswert ist, dass sich die mehrere Einbringungsorte (A ; B) räumlich überlagern können.
Jeder Kontaktsensor (3) ist zwecks Weiterleitung von Signalen/ Daten/ Werten (4 ; 5 ; 14), werte-, signal- oder datentechnisch direkt oder indirekt verbunden mit mindestens einer Auswerteeinheit (E) oder einem Auswertemodul (E). Selbiges gilt für Nebensensoren (20).
Jede Auswerteeinheit (E) ist dabei vorzugsweise eine elektronischen Auswerteeinheit, welches die Signale/ Daten/ Werte (4 ; 5 ; 14) der Kontaktsensoren (3) oder Nebensensoren (20) werte-, signal- oder datentechnisch empfangen und, gegebenenfalls unter vorheriger Verstärkung oder Filterung (60 ; F/V), senden können. Die Korrespondenz oder der Informationsaustausch- oder Informationsfluß erfolgt dabei zu einem IT- und Elektroniksystem (50), oder alternativ zu mehreren solchen IT- und Elektroniksystemen.
Es ist denkbar und erfinderisch, dass alle Kontaktsensoren (3) Signale/ Daten/ Werte (4 ; 5 ; 14) an eine spezielle, erste, Auswerteeinheit (E) senden, und alle Nebensensoren deren Signale/ Daten/ Werte (4 ; 5 ; 14) an eine andere, zweite, Auswerteeinheit (E) senden.
Fig. 1 , Fig. 2 und Fig. 3 ist dabei gemein, dass die Übermittlung von Signalen/ Daten/Werten (4 ; 5 ; 14) entweder leitungsgebunden (L) erfolgen kann, beispielsweise über diskrete Leitungen (L) oder über lokale Netzwerke auf Basis des IEEE 802 Standards, vorzugsweise jedoch drahtlos (LW) erfolgt. Drahtlose Übertragung setzt insbesondere separate Spannungs- bzw. Stromversorgung derjenigen Geräte voraus, welche nicht an das Energienetz angeschlossen sind oder angeschlossen werden.
Fig. 4 zeigt einen beispielhaften Ablauf des Verfahrens zur Erkennung und Überwachung des beispielhaften WKA-Lagers (K) von oben nach unten darstellend die Erfassung von Signalen/ Daten/ Werten (4 ; 5 ; 14) mit nachfolgender Differenzbildung $DIFF_i$, einem darauffolgenden Grenz- oder Schwellenwertergleich, die Zählerinkrementierung (k = k+1) bei Schwellwertüberschreitung, und ebenso die Generierung von Warnmeldungen oder Initiierung von Warnungs-Datennachrichten (MESSAGE/DATA_ALERT) und darauffolgende Übermittlung dieser Wammeldungen an den Zentral- oder Kontrollrechner (80).
Fig. 5 zeigt beispielhaft einen Kontaktsensor (3) nach piezoelektrischem Prinzip, welcher auf die Fläche (1) des zu überwachenden Lagers (K) aufgebracht ist, kennzeichnende die mechanische Änderung innerhalb des Piezokems (9), sowie das Prinzip der elektrischen Signalgenerierung (4), welches an der Sensor-Schnittstelle (22) anliegt. Fig. 5a hingegen beschreibt schematisch einen Kontaktsensor (3) nach soeben beschriebenen piezoelektrischem Prinzip, jedoch in der vorzugsweisen Ausgestaltungsform als intelligenter Sensor, d.h. mit angeschlossenem Mikrokontroller (6) und zugehörigen Bausteinen (Schnittstellen, Rechenwerk, Steuerwerk, Gehäuse, et cetera.) .
Fig. 6 weist einen Kontaktsensor (3) nach einem induktivem Prinzip auf, ebenfalls als intelligenter oder "smart" Sensor, d.h. mit angeschlossenem Mikrokontroller (6) und zugehörigen Bausteinen wie Prozessor (15), Schnittstellen (22 ; 23 ; 19 ; 24), Rechenwerk (17) bzw. Steuerwerk (16), Gehäuse (21) und des Weiteren aufweisend ein Verstärkungs - und ggfs. Filterungsmodul (FN ; 60). Kennzeichnend für diesen induktiven Sensor (3) sind hierbei die auf die Fläche bzw. Kontur (1) ein- oder aufbringbare Membran (7), das permanentmagnetische Element oder Modul (10), das induktive oder Spulenelement (11).

Wie bei allen erfindungsgemäßen Kontaktsensoren (3) treffen Geräusche/ Vibrationen/Schallwellen (2) auf diese Fläche (1) auf und werden aufgenommen oder erfasst durch den Sensor (3), insbesondere durch die Mikromechanische Ausprägung der sensierenden Elemente im Sensor (3).

Fig. 7 zeigt beispielhaft einen Kontaktsensor nach kapazitiven Prinzip, beinhaltend eine in sein Gehäuse (21) integriertes Netzwerk-Modul (13) sowie eine Elektrode (8), mehrere Schnittstellen zur beispielsweisen Anbindung des Sensors (3) an ein drahtgebundenes (L) Bussystem oder alternativ an ein drahtloses Kommunikationsgerät.

Sowohl Fig. 5a als auch Fig. 6 zeigen den als intelligenter Sensor, d.h. aufweisend mindestens einen Speicher (18) zur Speicherung von Daten oder Werten, beispielsweise von SOLL-, und/ oder THRESHOLD- Daten oder Werte, oder auch anderen für das Verfahren zweckdienlichen Daten oder Werte. Fig. 5a weist darüber hinaus ein gemeinsames Gehäuse auf (26), d.h. der Sensor (3) und verbunden ist mit einem Mikrocontroller (6).

In der Praxis werden beispielsweise spezielle Kontaktsensoren (3) am zu überwachenden Lager oder an der zu überwachenden Drehverbindung (K), bzw. am zu überwachenden Bauteil oder Lager- oder Bauteilsegment (K) an- oder eingebracht, beispielsweise an mehreren Stellen (A) des Lagers, vorzugsweise an je einer definierten Stelle (A) pro Lager - oder Bauteilsegment. Die Kontaktsensoren (3) und/ oder die Nebensensoren (20) können unter Zuhilfenahme von Haltevorrichtungen wie zum Beispiel Installations-, Montage-, oder Halteblechen im oder am Einbringungsort (A ; B) fixiert werden.

Es hat sich insbesondere als vorteilhaft erwiesen, wenn diese Kontaktsensoren (3) in nahezu gleichem Abstand zueinander benachbart sind. Werden beispielsweise drei Kontaktsensoren zur Überwachung eines Lagerringes (K) verwendet, so seien die Kontaktsensoren (3) im Abstand von je 120° zueinander am zu überwachenden Lagerring (K) angebracht. Werden hingegen beispielsweise sechs oder acht Kontaktsensoren zur Überwachung verwendet, so seien diese im Abstand von je 60° oder 45° zueinander am zu überwachenden Lagerring (K) angebracht.

Nicht nur einzelne Kontaktsensoren (3) werden hier am zu überwachenden Lagerring (K) angebracht, sondern es kann alternativ ein Kontaktsensornetzwerk an jenem Lagerring angebracht werden, beispielsweise in Form einer selbstklebenden oder anklebbaren Matte. Diese "Sensormatte" oder "Sensornetzwerk" enthält ein Geflecht oder Netzwerk aus sehr vielen diskreten, jedoch untereinander elektrisch verbundenen oder verbindbaren, Kontaktsensoren. Um eine vereinfachte Installation am Lagerring zu ermöglichen, kann diese "Sensormatte" der Kontur des zu überwachenden Lagerringes nachempfunden sein. Dabei ist es jedoch von erhöhter Wichtigkeit, dass keine lastabtragenden Teile des Lagerringes (K), wie etwa Schrauben, Muttern. Anschraubbohrungen, Schraublöcher, Schmiereinlass- und/oder Auslassbohrungen, etc. von der "Sensormatte" berührt oder überdeckt werden.

Letztlich kann diese "Sensormatte" oder dieses "Sensornetzwerk" auch mittels physikalischer Verfahren auf das zu überwachende Bauteil, beispielsweise auf den zu überwachenden Lagerring (K) oder auf die Fläche (1) des zu überwachenden Drehverbindungsrings aufgebracht werden. In einer entfernten Ausgestaltung und Weiterentwicklung der Erfindung ist auch die Verwendung einer solchen "Sensormatte" oder eines solchen "Sensornetzwerks" denkbar, welche mittels Herstellungsverfahren zur Herstellung mikroelektronischer Bauelemente oder integrierter Schaltkreise hergestellt wurden, beispielsweise mittels Sputtertechnik oder CVD-Verfahren. Es ist folglich ebenso denkbar im Sinne der Erfindung, dass Kontaktsensoren (3) verwendet werden, welche folglich auf Halbleitern basierende Schaltungen beinhalten. Die Herstellung solcher mikroelektronischer Schaltkreise erfolgt durch Verfahren der Halbleitertechnik (Herstellung der Bauelemente auf einem Substrat und bei monolithischen Schaltkreisen die Verdrahtung) und Aufbau- und Verbindungstechnik. Dabei können auch Verfahren der Dünnschichttechnik eingesetzt werden.

Die erfindungsgemäßen Kontaktsensoren (3) sind dabei im Allgemeinen, als auch im Beispiel des Windenergie-Hauptlagers, als Geräuschaufnehmer oder Geräuscherfasser zu verstehen und können beispielsweise Geräusche im gesamten Körperschall-Frequenzband, beispielsweise im Bereich von 0,01 Hz bis > 20 kHz erfassen/ aufnehmen (folglich den gesamten Bereich des für menschlich hörbaren Schalls), aber auch weitgehend darüber hinaus, beispielsweise in den Megahertz-Bereich.

Insbesondere von Wichtigkeit für die Erfassung von Geräuschen sowie deren Reflexion und Beugung im Hinblick auf die Überwachung von Lager- und Drehverbindungsstrukturen ist der Bereich 0,1 Hz bis > 1,0 kHz, wobei Bauteile und Komponenten, beispielsweise welche die Geräusche der Gesamtanlage (etwa die Rotorunwuchten und Turmbiegefrequenzen bei einer Windenergieanlage) aufnehmen/ erfassen sollen im Frequenzbereich zwischen 0,1 Hz und etwa 10 Hz überwacht werden. Demgegenüber werden beispielsweise Bauteile und Komponenten, beispielsweise welche die Schwingung der schnell bewegten Maschinenteile aufnehmen/ erfassen sollen im Frequenzbereich zwischen 10 Hz und etwa 1,0 kHz überwacht.

Die Geschwindigkeit des Schalls in Metallmaterialien - so auch beispielsweise im Stahl von Lagerkonstruktionen - kann dabei grundsätzlich, je nach Zusammensetzung und/ oder Legierung und Temperatur des Metalls, zwischen 2,5 * 1000 m/s und 6,5 * 1000 m/s betragen. In der Regel ist die Schallgeschwindigkeit bei niedrigen Temperaturen geringer als bei hohen Temperaturen.

Die Kontaktsensoren (3), die am Windenergie-Hauptlager (K) angebracht werden, können beispielsweise piezoelektrische Sensoren sein und stehen je in permanenter körperlicher Berührung mit einem der Lagerringe, und erfassen die durch den Körperschall an der jeweiligen Einbringungsstelle resultierenden elektrischen Potenzialänderungen. Der Körperschall tritt während des Betriebs des Lagers (L) oder der Drehverbindung auf. Vorteile in der Verwendung von piezoelektrischer Kontaktsensorik ist die verhältnismäßig gute Verwendbarkeit der erfassten Signale, d.h. die erfassten Signale bzw. Spannungen brauchen in nachfolgenden Stufen nicht vielfach gefiltert zu werden.

Als Kontaktsensoren können hier alternativ oder zusätzlich induktive oder kapazitive Sensoren eingesetzt werden.

Auch Wirbelstromsensoren können in einer sehr weit gefassten/ alternativen Ausgestaltungsform der Erfindung gegebenenfalls als Kontaktsensoren (3) eingesetzt werden. Bei solchen Wirbelstromsensoren erzeugt ein Wechselfeld im elektrisch leitfähigen Objekt (Lager) Wirbelströme, woraus joulsche Verluste resultieren. Auch Ultraschallsensoren sind als Kontaktsensoren grundsätzlich einsetzbar. Insbesondere können mittels Ultraschallsensoren auch kleinere Defekte präzise erkannt werden. Ebenso können als Kontaktsensoren Geräuchssensoren eingesetzt werden. Insbesondere bei der Überwachung von Drehverbindungen und Lagern in Windenergieanlagen sind Geräuchssensoren empfehlenswert.

In einer weiteren Ausgestaltung der Erfindung werden die Kontaktsensoren (3) nicht direkt, sondern mittelbar mit der zu überwachenden Baugruppe (K) oder Komponente verbunden, beispielsweise über eine an dieser Baugruppe oder Komponente angebrachte, vorzugsweise angeschweißte oder angeschraubte, Trägerapparatur. Der jeweilige Montageort dieser solchen Trägerapparatur definiert dann den An- oder Einbringungsort (A) für den jeweiligen Kontaktsensor. Als Kontaktsensoren können, gegebenenfalls zusätzlich, filigran gearbeitete oder kleinteilige Seismometersensoren eingesetzt werden, um ebenfalls Körperschall, jedoch diejenigen Anteile mit längeren Wellenlängen, zu erfassen.

Gleichfalls werden einer weiteren Ausgestaltung der Erfindung eine oder mehrere nebengeordnete Sensoren (20) nicht direkt, sondern mittelbar mit der zu überwachenden Baugruppe oder Komponente verbunden, beispielsweise über eine an dieser Baugruppe oder Komponente angebrachte, vorzugsweise angeschweißte oder angeschraubte, Trägerapparatur. Der jeweilige Montageort dieser solchen Trägerapparatur definiert dann den An- oder Einbringungsort (B) für den jeweiligen nebengeordneten Sensor.

In der Regel und anhand des obigen Beispiels des Windenergie-Hauptlagers (K) erzeugen beispielsweise Wälzkörper während ihrer Roll- oder Gleitbewegung im Laufbahnsystem entsprechende Abrollgeräusche. Die Grundlage hierzu ist die unterschiedliche Ausbreitungsgeschwindigkeit der Longitudinal- und Transversalwellen sowie deren Reflexion und Beugung an den Lagerstrukturen. Diese Abrollgeräusche treten als charakteristische Frequenzanteile im Körperschall-Frequenzband auf. So können die akustischen Eigenschaften der Lagerkomponenten und der technische Zustand (Verschleiß der Lager, Späne im Lager, zu wenig Schmiermittel, zu viel Schmiermittel, zyklisches Klopfen an bestimmten Positionen, etc.) des Lagers oder der Drehverbindung erfasst werden. Weiterhin können Rissentstehung und Pittingbildung erkannt werden, teilweise bereits viele Betriebsstunden bevor diese Risse oder Defektstellen im Lager oder in der Drehverbindung zu einem Materialversagen führen, welche nicht nur das Lager oder die Drehverbindung, sondern auch die gesamte daran befestigte Anlage in den Reparatur-Stillstand zwingen würde.

Als Sensoren mit nebengeordneter Funktion (20) dienen beispielsweise Sensoren zur Aufnahme oder Erfassung von Temperatur,- Druck-, Drehzahl-, Beschleunigungs- und Schmiermittelzustandsdaten. Ebenso können Positionen aufgenommen oder erfasst werden. Hierfür können gängige Temperatur-, Druck-, Drehzahl-, Beschleunigungs-, Schmierstoffzustands- oder inkrementelle Sensoren eingesetzt werden. Alle diese Sensoren mit nebengeordneter Funktion (20) können in oder am zu überwachenden Bauteil (K) angebracht werden, um flankierende Werte über das messtechnisch zu erfassende und zu überwachende Lagers, oder Lagersegment bereitzustellen.

Die Auswertung der aus den Kontaktsensoren (3) gewonnenen Daten/ Werte/ Signale (4 ; 5 ; 14) als auch die Auswertung der aus den der Sensoren mit nebengeordneter Funktion (20) gewonnenen Daten/ Werte/ Signale (4 ; 5 ; 14), erfolgt zumindest periodisch oder permanent, beispielsweise sogar stets in Echtzeit. Es bietet sich also im Sinne der Erfindung an, dass das oben bezeichnete IT- und Elektroniksystem (50) echtzeitfähig ist. Als besonders hilfreich im Sinne der Erfindung erweist sich hier ein echtzeitfähiges Steuergerät oder ein echtzeitfähiger Steuerrechner in der unmittelbaren Nähe des zu überwachenden Bauteils (K) oder der zu überwachenden Komponente (K), beispielsweise in unmittelbarer Nähe des zu überwachenden Lagers (K) bzw. der zu überwachenden Drehverbindung (K). Es ist aber auch ein solches Steuergerät oder ein solcher Steuerrechner erfindungsgemäß denkbar, welcher in der Anlage vorhanden ist, in die das Lager oder die Drehverbindung eingebaut ist, beispielsweise in der Nabe, im Maschinenhaus oder im Turm einer Windenergieanlage.

Die Kontaktsensoren (3) sowie auch die Nebensensoren (20) in obigem Beispiel sind in der vorteilhaftesten Ausprägungsform der Erfindung als intelligente Sensormodule auszugestalten, d.h. mit einem jeweils zugehörigen Mikrokontroller (6) inklusive einer kleinen elektronischen Datenspeichereinheit (18). Die jeweilige Stromversorgung jedes einzelnen Sensors (3 ; 20) kann dann beispielsweise über eine bereis in der Nähe des Lagers vorhandene Stromversorgung erfolgen, oder beispielsweise über leicht anbringbare Solar - oder Photovoltaikzellen, beispielsweise über aufklebbare Solar- oder Photovoltaikzellen, welche zwar gegenüber der Sonnenstrahlung exponiert, jedoch dennoch in der Nähe des jeweiligen Sensors positioniert werden.

Die Auswertung der aus den Kontaktsensoren (3) und/ oder Nebensensoren (20) gewonnenen Daten/ Werte/ Signale (4 ; 5 ; 14) erfolgt stets in mindestens einer Lagerexternen, beispielsweise über elektrische Leitungen mit den Sensoren verbundenen, Auswerteeinheit (E). Die Kontaktsensoren (3) und/ oder Nebensensoren (20) sind also mittels elektrischer Leitungen (L) mit den Auswerteeinheiten oder mit der Auswerteeinheit elektrisch verbunden. In einer alternativen Ausgestaltung erfolgt die Verbindung zwischen Kontaktsensoren (3) sowie auch die Nebensensoren (20) und Auswerteeinheit(en) (E) ohne leitungsgebundene physikalische Verbindung mit der mindestens einen Auswerteeinheit, also drahtlos, (engl.: "wireless"), beispielsweise über Funkdatenübertragung (LW). In jener Ausgestaltung herrscht drahtloser Datenverkehr zwischen der mindestens einen Auswerteeinheit (E) und jedem zum überwachten Lager gehörigen Sensors (3 ; 20).

In einer weiteren alternativen Ausgestaltung sind die einzelnen Kontaktsensoren (3) und/oder Nebensensoren (20) in einem Signalbus Verbund zusammengeschaltet. Beispielsweise, aber nicht begrenzt auf: CAN-Bus, LIN-Bus, etc. Es empfiehlt sich in jener Ausgestaltung, dass die einzelnen Sensoren (3; 20) ihre eigene Stromversorgung über den Busverbund beziehen. Es empfiehlt sich in jener Ausgestaltung des Weiteren, wenn die einzelnen Sensoren über jeweils eigene internen Speicher (18) verfügen.

Die schlussendliche Beurteilung und Kategorisierung des überwachten Bauteils oder der überwachten Komponente, beispielsweise des genannten Windenergie-Hauptlagers, ob ein funktionsfähiges Bauteil (K) oder Komponente (K), vereinfachend bezeichnet als 'i.O.-LAGER', vorliegt, oder ob ein nicht-funktionsfähiges Bauteil oder Komponente, vereinfachend bezeichnet als 'n.i.O.-LAGER', vorliegt, wird stets unter Zuhilfenahme der Wissensdatenbank (WB) getroffen, wie folgend beschrieben wird: Die Wissensdatenbank (WB) verfügt in dessen internen Speicher über mehrere , als komponenten- oder bauteilschädigend bekannte Betriebsmuster', welche als Geräuschs- oder Geräuschmuster ($SAMPLE_{krit\ i}$.) in der Wissensdatenbank gespeichert sind.

Das erfindungsgemäße Verfahren ist in der Lage bis zu vierzug, gegebenenfalls auch noch mehr, der 'als komponenten- oder bauteilschädigend bekannte Betriebsmuster' mit gewisser Wahrscheinlichkeitsbehaftung zu erkennen, zu unterscheiden. Vollständigen Aufschluß über die möglichen 'als komponenten- oder bauteilschädigend bekannte Betriebsmuster' zeigt folgende Auflistung:

$SAMPLE_{krit\ 1}$ = f (Verschleiß des Lagers),
$SAMPLE_{krit\ 2}$ = f (starker Verschleiß des Lagers),
$SAMPLE_{krit\ 3}$ = f (Späne im Lager),
$SAMPLE_{krit\ 4}$ = f (zu wenig Schmiermittel im Lager),
$SAMPLE_{krit\ 5}$ = f (Rissbildung im Laufbahnsystem),
$SAMPLE_{krit\ 6}$ = f (starke Rissbildung im Laufbahnsystem)
$SAMPLE_{krit\ 7}$ = f (Pittingbildung im Laufbahnsystem),
$SAMPLE_{krit\ 8}$ = f (Lagerfraß oder Lagerfestsetzung),
$SAMPLE_{krit\ 9}$ = f (Kantenausbruch),
$SAMPLE_{krit\ 10}$ = f (Lagerdeformation),
$SAMPLE_{krit\ 11}$ = f (schwere Lagerdeformation),
$SAMPLE_{krit\ 12}$ = f (Wälzkörperbeschädigung),
$SAMPLE_{krit\ 13}$ = f (Wälzkörperverlust),
$SAMPLE_{krit\ 14}$ = f (Schmiermittelüberalterung),
$SAMPLE_{krit\ 15}$ = f (starke Schmiermittelüberalterung),
$SAMPLE_{krit\ 16}$ = f (Erhöhter Eisengehalt im Schmiermittel),
$SAMPLE_{krit\ 17}$ = f (Verringerung der Schraubenvorspannung),
$SAMPLE_{krit\ 18}$ = f (starker Verlust der Schraubenvorspannung),
$SAMPLE_{krit\ 19}$ = f (elastische Verformung des Laufbahnsystems),
$SAMPLE_{krit\ 20}$ = f (Wasser im Lager),
$SAMPLE_{krit\ 21}$ = f (Grübchen oder Riefenbildung),
$SAMPLE_{krit\ 22}$ = f (Käfigverschleiß),
$SAMPLE_{krit\ 23}$ = f (Käfigbruch),
$SAMPLE_{krit\ 24}$ = f (Bruch von Distanzstücken),
$SAMPLE_{krit\ 25}$ = f (Dichtungsleckage),
$SAMPLE_{krit\ 26}$ = f (Klemmung der Dichtung ins Laufbahnsystem),
$SAMPLE_{krit\ 27}$ = f (Ankündigung des Bruchs von Zähnen),
$SAMPLE_{krit\ 28}$ = f (Bruch von Zähnen),
$SAMPLE_{krit\ 29}$ = f (Abnutzungsbruch des Lagers),
$SAMPLE_{krit\ 30}$ = f (Lagerfehler infolge abrupter Blattverstellung),
$SAMPLE_{krit\ 31}$ = f (Lagerfehler infolge Blitzschlag),
$SAMPLE_{krit\ 32}$ = f (Segmentausbruch im Lager),
$SAMPLE_{krit\ 33}$ = f (Segmentausbruch im Käfig),
$SAMPLE_{krit\ 34}$ = f (Teilweiser Abriss eines Blattes),

$SAMPLE_{-krit\ 35}$ = f (Komplettabriss eines Blattes),
$SAMPLE_{-krit\ 36}$ = f (Schädigung der Hauptabtriebswelle),
$SAMPLE_{-krit\ 37}$ = f (Bruch der Hauptabtriebswelle),
$SAMPLE_{-krit\ 38}$ = f (Erhöhter Schmiermitteldruck im Lager),
$SAMPLE_{-krit\ 39}$ = f (Verringerter Schmiermitteldruck im Lager),
$SAMPLE_{-krit\ 40}$ = f (Totalverlust der Schraubenvorspannung),

Beispielsweise kann das ‚als komponenten- oder bauteilschädigend bekannte Betriebsmuster' $SAMPLE_{-krit\ 1}$ ein Betriebsmuster aufzeigen, welches auf Verschleiß des Lagers schliessen lässt; beispielsweise kann das ‚als komponenten- oder bauteilschädigend bekannte Betriebsmuster' $SAMPLE_{-krit\ 3}$ 3 ein Betriebsmuster aufzeigen, welches auf Späne im Lager schliessen lässt; beispielsweise kann das ‚als komponenten- oder bauteilschädigend bekannte Betriebsmuster' $SAMPLE_{-krit\ 4}$ ein Betriebsmuster aufzeigen, welches auf zu wenig Schmiermittel im Lager schliessen lässt; beispielsweise können die 'als komponenten- oder bauteilschädigend bekannte Betriebsmuster' $SAMPLE_{-krit\ 4}$ sowie $SAMPLE_{-krit\ 5}$ verschiedene Schweregrade der Betriebsmuster aufzeigen, welches auf mehr oder wenig fortgeschrittene Rissentstehung im Laufbahnsystem schliessen lässt; beispielsweise kann das ‚als komponenten- oder bauteilschädigend bekannte Betriebsmuster' $SAMPLE_{-krit\ 7}$ ein Betriebsmuster aufzeigen, welches auf Pittingbildung im Laufbahnsystem schliessen lässt, et cetera.

Die jeweilige Entscheidung, ob ein erkanntes ‚als komponenten- oder bauteilschädigend bekanntes Betriebsmuster' tatsächlich der Praxis wahrheitsgemäß gegeben ist, kann vom erfindungsgemäßen Zustandserkennungs- und Zustandsüberwachungs-System (100) dabei stets mit einer gewissen Wahrscheinlichkeit getroffen werden.

Die letztendliche Entscheidung, ob das periodisch oder permanent vom Zustandserkennungs- und Zustandüberwachungs - System (100) überwachte Bauteiles (K), beispielsweise das Windenergie-Hauptlager, als ein 'i.O.-LAGER', oder als ein 'n.i.O.-LAGER', erkannt wird, erfolgt stets anhand einer (statistischen) Wahrscheinlichkeits-Aussage, welche im hochentwickelten IT- und Elektroniksystem (50) berechnet wird, unter Zugriff auf die erfindungsgemäße Wissensdatenbank (WB).

In einer weiteren Ausgestaltung der Erfindung wird innerhalb des erfindungsgemäßen Zustandserkennungs- und Zustandsüberwachungs-Systems (100) bei jedem Auftreten eines oder mehrerer ‚als komponenten- oder bauteilschädigend bekannte Betriebsmuster' einer oder mehrere Fehlerspeichereinträge, sogenannte "Fehlercodes" oder "Fehlerdiagnosecodes" gespeichert. Ein jeder der solchen "Fehlercode" oder "Fehlerdiagnosecodes" beschreibt jeweils nur eines der oben genannten ‚als komponenten - oder bauteilschädigend bekannten Betriebsmuster'. In der am weitest ausgeprägten Ausgestaltungsform der Erfindung vermag das erfindungsgemäße Zustandserkennungs- und Zustandsüberwachungs-System bis zu vierzug unterschiedliche "Fehlercode" oder "Fehlerdiagnosecodes" zu unterscheiden.

In der besonders vorteilhaften zukünftigen Ausgestaltung der Erfindung ist die Wissensbasis (WB) durch Mechanismen zum Selbstlernenden und zur Selbstoptimierung Wahrscheinlichkeits-Aussage hinsichtlich ‚als komponenten- oder bauteilschädigend bekannten Betriebsmuster' erkannten Sachverhalten zu verbessern, gegebenenfalls nachzuschärfen, und eigenständig in Anzahl und Qualität/ Güte zu erhöhen.

**Patentansprüche**

1. Zustandserkennungs- und Zustandsüberwachungs- System (100) zur mindestens zeitweisen, gegebenenfalls periodischen, vorzugsweise sogar permanenten, (werte-, signal - oder datentechnischen) Erfassung und Überwachung von Zustandsparametern mindestens einer Baugruppe (K) oder Komponente, oder gar von Teileelementen dieser Baugruppe oder Komponente, insbesondere mindestens eines Lagers oder einer Drehverbindung, beispielsweise in oder an einer Windkraftanlage, aufweisend:

   - mindestens einen, vorzugsweise mehr als zwei, an diese Baugruppe oder Komponente (K) angebrachten oder eingebrachten Kontaktsensor (3),
   - vorzugsweise welcher mittelbar oder unmittelbar an- oder einbringbar ist an oder in einem Einbringungsort (A), beispielsweise welcher an einer ebenen oder gerundeten Fläche (1) oder Kontur dieser Baugruppe (K) liegt,
   - zweckmäßigerweise an- oder einbringbar ist mittels Schraubung/ Steckung/ Schweißung/Lötung/ Klebung oder Klemmung eventuell an Nasenring oder Tragring oder Haltering eines Großwälzlagers,
   - alternativ welcher direkt an- oder einbringbar ist an oder auf mindestens eine radiale oder axiale Innen- oder Außenfläche (1) eines Blatt-, Haupt-, oder Turmlagers einer Windkraftanlage.

2. Zustandserkennungs- und Zustandsüberwachungs- System (100) nach Anspruch 1 **gekennzeichnet dadurch, dass**:

der mindestens eine Kontaktsensor (3) zwecks Weiterleitung von Signalen/ Daten/ Werten (4 ; 5 ; 14), werte-, signal- oder datentechnisch direkt oder indirekt verbunden ist oder verbunden werden kann mit mindestens einer Auswerteeinheit (E) oder einem Auswertemodul, insbesondere mit einer elektronischen Auswerteeinheit, wobei optional auch mindestens ein nebengeordneter Sensor (20), welcher kein Kontaktsensor (3) ist, zwecks Weiterleitung von Signalen/ Daten/ Werten (4 ; 5 ; 14), werte-, signal- oder datentechnisch direkt oder indirekt mit dieser Auswerteeinheit (E) verbunden ist oder verbunden werden kann.

3. Zustandserkennungs- und Zustandsüberwachungs- System (100) nach Anspruch 1 oder 2 **gekennzeichnet dadurch, dass**:

   Signale/ Daten/ Werte (4 ; 5 ; 14), gegebenenfalls unter vorheriger Verstärkung oder Filterung (60 ; F/V), werte-, signal- oder datentechnisch empfangen werden können von mindestens einem IT- und Elektroniksystem (50), alternativ von mehreren IT- und Elektroniksystemen.

4. Zustandserkennungs- und Zustandsüberwachungs- System (100) nach einem der Ansprüche 1 bis 3, **gekennzeichnet dadurch, dass**:

   die Übermittlung von Signalen/ Daten/ Werten (4 ; 5 ; 14) entweder leitungsgebunden (L) erfolgt, beispielsweise über diskrete Leitungen (L) oder über lokale Netzwerke auf Basis des IEEE 802 Standards erfolgt, vorzugsweise jedoch drahtlos (LW) erfolgt.

5. Zustandserkennungs- und Zustandsüberwachungs- System (100) nach Anspruch 4, **gekennzeichnet dadurch, dass**:

   die Übermittlung von Signalen/ Daten/ Werten (4 ; 5 ; 14) auf Basis von WLAN oder Bluetooth Standards, alternativ via Feldbussystem(en), erfolgt, gegebenenfalls unter Verwendung von Sende- und Empfangseinheiten für Profibus-, CAN-Bus-, MOST-Bus-, LIN-Bus-, FlexRay-Bus oder Ethernet-Bus- Systemen.

6. Zustandserkennungs- und Zustandsüberwachungs- System (100) nach Anspruch 1 oder Anspruch 2 oder einem der vorhergehenden Anspruche, **gekennzeichnet dadurch, dass**:

   mindestens ein Kontaktsensor (3) als piezoelektrischer Sensor ausgestaltet ist, alternativ als induktiver Sensor ausgestaltet ist, alternativ auch als kapazitiver Sensor ausgestaltet ist, wobei gegebenenfalls zusätzlich mindestens ein weiterer nebengeordneter Sensoren (20) mittelbar oder unmittelbar an- oder einbringbar ist an oder in einem Einbringungsort (B) an oder auf einer Fläche (1) oder Kontur dieser Baugruppe (K) oder Komponente, wobei sich mehrere Einbringungsorte (A ; B) räumlich überlagern können.

7. Zustandserkennungs- und Zustandsüberwachungs- System (100) nach Anspruch 1 oder nach den drei vorgenannten Ansprüchen, **gekennzeichnet dadurch, dass**:

   mindestens ein Kontaktsensor (3) oder nebengeordneter Sensor (20) als intelligenter Sensor ausgestaltet ist, aufweisend mindestens einen Speicher (18), vorzugsweise welcher in einem gemeinsamen Gehäuse (21; 26) verbunden ist mit einem Mikrocontroller (6).

8. Zustandserkennungs- und Zustandsüberwachungs- System (100) nach Anspruch 1 oder Anspruch 7 oder einem der vorhergehenden Ansprüche, **gekennzeichnet dadurch, dass**:

   der mindestens eine Kontaktsensor (3) und/ oder der nebengeordnete Sensor (20) mindestens drei der folgenden Bausteine oder Komponenten aufweist: Mikroprozessor (15), Steuerwerk (16), Rechenwerk (17), Schnittstelle (22 ; 23 ; 19 ; 24), Spannungsversorgung (12), Membran (7), Elektrode (8) oder piezoelektrisches Element (9) oder induktives Element (11) oder Widerstand (13) oder Permanentmagnet/ Eisen (10), sowie gegebenenfalls ferner aufweist einen Systembus (25), vorzugsweise wobei mindestens einer der Kontaktsensoren (3) mit einer Membran (7) an der Fläche (1) oder Kontur der Baugruppe (K) oder Komponente punktuell kontaktiert oder flächig anliegt.

9. Zustandserkennungs- und Zustandsüberwachungs- System (100) nach dem vorgenannten Anspruch, **gekennzeichnet dadurch, dass**:

der mindestens eine Kontaktsensor (3) und/ oder nebengeordnete Sensor (20) von einem Gehäuse (21 ; 26) umfasst wird, welches im Einbringungsort (A ; B) für diesen Sensor (3 ; 20) direkt oder indirekt an die Baugruppe (K) oder Komponente an- oder eingebracht wird, gegebenenfalls unter Zuhilfenahme von Haltevorrichtungen wie zum Beispiel Installations-, Montage-, oder Halteblechen.

10. Zustandserkennungs- und Zustandsüberwachungs- System (100) nach Anspruch 1 und nach Anspruch 3 oder nach einem der vorgenannten Ansprüche, **gekennzeichnet dadurch, dass**:

- das mindestens eine IT- und Elektroniksystem (50) eine Wissensdatenbank (WB) aufweist oder beinhaltet,
- alternativ mit einer externen Wissensdatenbank (WB) werte-, signal- oder datentechnisch verbunden ist oder verbunden werden kann,
- wobei diese Wissensdatenbank (WB) Erfahrungsdaten wie etwa Schwell- oder Grenzwerte oder sogenannte THRESHOLD-Daten oder THRESHOLD-Werte enthält,
- vorzugsweise auch/ oder Kennfelder und Betriebsmuster oder sogenannte WISSENS-Daten oder WISSENS- Werte enthält, gegebenenfalls die je eine Folge oder Funktion mehrerer Schwell- oder Grenzwerte abbilden,
- idealerweise wobei einige spezielle WISSENS-Daten oder WISSENS-Werte Folgen oder Funktionen von 'als komponenten- oder bauteilschädigend bekannte Betriebsmuster darstellen oder kennzeichnen, beispielsweise je als $SAMPLE_{-krit}$ bezeichnet,
- wobei das mindestens eine IT- und Elektroniksystem (50) ferner werte-, signal- oder datentechnisch mit einem Zentral- oder Kontrollrechner (80) verbunden ist oder verbunden werden kann, gegebenenfalls welcher räumlich getrennt von der Baugruppe (K) oder Komponente angebracht ist, beispielsweise etwa mehr als 5 Meter weit entfernt angebracht ist, vorzugsweise viele Kilometer weit entfernt angebracht ist.

11. Verfahren zur mindestens zeitweisen oder periodischen, vorzugsweise sogar permanenten, Erfassung und Überwachung von Zustandsparametem mindestens einer Baugruppe (K) oder Komponente, beispielsweise eines Lager oder eine Drehverbindung in oder an einer Windkraftanlage,
aufweisend:

direkte oder indirekte Übermittlung von Signalen/ Daten/ Werten (4 ; 5 ; 14) mindestens eines Kontaktsensors (3), gegebenenfalls zusätzlich mindestens eines nebeneordneten Sensors (20) an mindestens eine Auswerteeinheit (E) oder an ein IT- und Elektroniksystem (50), alternativ an ein Verbund an mehreren (hochentwickelten) IT- und Elektroniksystemen.

12. Verfahren zur mindestens zeitweisen oder periodischen, vorzugsweise sogar permanenten, Erfassung und Überwachung von Zustandsparametern mindestens einer Baugruppe (K) oder Komponente nach Anspruch 11, **gekennzeichnet dadurch, dass**:

die direkte oder indirekte Übermittlung von Signalen/ Daten/ Werten (4 ; 5 ; 14) leitungsgebunden erfolgt, beispielsweise über diskrete Leitungen (L) oder über mindestens ein Netzwerk auf Basis des IEEE 802 Standards, vorzugsweise oder alternativ auch drahtlos (LW) erfolgt, beispielsweise auf Basis des WLAN oder Bluetooth Standards, oder via Systembus- oder Feldbussysteme erfolgt, gegebenenfalls erfolgt unter Verwendung von Verwendung von Sende- und Empfangseinheiten für Profibus-, oder CAN-Bus-, oder MOST-Bus-, oder LIN- Bus-, oder FlexRay-Bus- oder Ethernet-Bus- Systeme.

13. Verfahren zur mindestens zeitweisen oder periodischen, vorzugsweise sogar permanenten, Erfassung und Überwachung von Zustandsparametern mindestens einer Baugruppe (K) oder Komponente nach Anspruch 11 oder Anspruch 12, **gekennzeichnet dadurch, dass**:

in einem Verfahrensschritt, vorzugsweise zwecks Differenzbildung, Solldaten mit Istdaten verglichen werden, beispielsweise entsprechend der Rechenoperation:

$$DIFF_i = IST_i - SOLL_i \text{ , bzw: - } DIFF_i = SOLL_i - IST_i .$$

14. Verfahren zur mindestens zeitweisen oder periodischen, vorzugsweise sogar permanenten, Erfassung und Überwachung von Zustandsparametern mindestens einer Baugruppe (K) oder Komponente nach einem der Ansprüche 11 bis 13, **gekennzeichnet dadurch, dass**:

in einem weiteren Verfahrensschritt, vorzugsweise zwecks Schwellwert- oder Grenzwertüberwachung, Differenzwerte mit oberen Schwell- oder Grenzwerten verglichen werden, beispielsweise entsprechend der Rechenoperation:

$$| \text{THRESHOLD}_i | < | \text{DIFF}_i | == \text{TRUE} ,$$

wobei gegebenenfalls alternativ oder zusätzlich Differenzwerte mit unteren Schwell- oder Grenzwerten verglichen werden, beispielsweise entsprechend der Rechenoperation:

$$| \text{THRESHOLD}_i | > | \text{DIFF}_i | == \text{TRUE} .$$

15. Verfahren zur mindestens zeitweisen oder periodischen, vorzugsweise sogar permanenten, Erfassung und Überwachung von Zustandsparametem mindestens einer Baugruppe (K) oder Komponente nach einem der vorgenannten Ansprüche 11 bis 13 oder nach Anspruch 14,
**gekennzeichnet dadurch, dass**:

in einem weiteren Verfahrensschritt, vorzugsweise zwecks Markierung oder Kenntlichmachung erkannter Überschreitungen eines jeweils zulässigen Grenzwertes, ein dafür vorgesehener Zähler (k) inkrementiert wird, beispielsweise entsprechend der Rechenoperation:

$$\text{IF} \, | \text{THRESHOLD}_i | < | \text{DIFF}_i | == \text{TRUE} , \text{THEN} \quad k = k+1 , \quad \text{oder}$$

beispielsweise zusätzlich oder alternativ bei Grenzwert Unterschreitungen analog, unter Verwendung eines anderen dafür vorgesehenen Zählers (m), gilt:

$$\text{IF} \, | \text{DIFF}_i | < | \text{THRESHOLD}_i | == \text{TRUE} , \text{THEN} \quad m = m+1 .$$

16. Verfahren zur mindestens zeitweisen oder periodischen, vorzugsweise sogar permanenten, Erfassung und Überwachung von Zustandsparametem mindestens einer Baugruppe (K) oder Komponente nach mindestens einem der vorgenannten Ansprüche, **gekennzeichnet dadurch, dass**:

in einem Verfahrensschritt, vorzugsweise zwecks frühzeitiger Ermöglichung von Reparatur - oder Servicemaßnahmen im Falle drohender Bauteil (K) - oder Komponentenschädigung, mindestens eine Wamungs-Datennachricht ergeht, beispielsweise in Form einer MESSAGE/DATA_ALERT - Nachricht, welche an einen Zentral- oder Kontrollrechner (80) und/ oder an das mindestens eine IT- und Elektroniksystem (50) gesendet werden kann.

**Fig. 1**

**Fig. 2**

**Fig. 3**

EP 2 696 071 A1

**(4 ; 5 ; 14)**          **E ; 50 ; WB**

$DIFF_i = IST_i - SOLL_i$ , bzw: $- DIFF_i = SOLL_i - IST_i$ ,

alternativ: $|DIFF_i| = |IST_i| - |SOLL_i| = |SOLL_i| - |IST_i|$

**E ; 50 ; WB**

$|THRESHOLD_i| < |DIFF_i| == TRUE$

**E ; 50 ; WB**

$IF |THRESHOLD_i| < |DIFF_i| == TRUE ,$     $THEN \ k = k+1$

alternativ: $IF \ |DIFF_i| > |THRESHOLD_i| == TRUE ,$    $THEN \ k = k+1$

**50 ; WB**

$IF \ \Sigma \ |k| > n_{krit}$ . THEN  MESSAGE/DATA  ALERT

$IF \ F\{|THRESHOLD_i|\} == SAMPLE\_{krit}$, THEN  MESSAGE/DATA_ALERT.

**100**

80

**Fig. 4**

Fig. 5

Fig. 5 a

EP 2 696 071 A1

**Fig. 6**

**Fig. 7**

Europäisches
Patentamt

European
Patent Office

Office européen
des brevets

# EUROPÄISCHER RECHERCHENBERICHT

**Nummer der Anmeldung**

EP 12 00 5801

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 548 419 A1 (NSK LTD [JP]) 29. Juni 2005 (2005-06-29) * Absätze [0001], [0050] - [0054], [0148] - [0150], [0156], [0199], [0224], [0168] - [0173]; Abbildungen 9, 34(a), 34(b), 35(a), 35(b) * ----- | 1-13,15, 16 | INV. F03D11/00 G01M13/00 G05B23/00 |
| X | WO 2004/085987 A1 (UNIV BRUNEL [GB]; JONES BARRY EDWARD [GB]; AU YUEN HONG JOSEPH [GB]; R) 7. Oktober 2004 (2004-10-07) * Seite 5, Zeile 22 - Seite 6, Zeile 7 * * Seite 12, Zeile 16 - Seite 14, Zeile 16 * <br> * Seite 14, Zeile 26 - Seite 15, Zeile 13; Abbildung 8 * ----- | 1-12,16 | |
| X | WO 2010/009750 A1 (SIEMENS AG [DE]; KLOS HANS-HENNING [DE]; MUELLER KLAUS-DIETER [DE]; SC) 28. Januar 2010 (2010-01-28) * Seite 1, Zeile 10 - Seite 4, Zeile 7 * * Seite 11, Zeile 22 - Zeile 29 * * Seite 20, Zeile 24 - Seite 21, Zeile 6 * * Seite 23, Zeile 1 - Zeile 20 * ----- | 1-6,8-16 | |
| X | US 2008/279686 A1 (DEMTRODER JENS [DK]) 13. November 2008 (2008-11-13) * Absätze [0010] - [0012], [0121] - [0131], [0023], [0024], [0058] * ----- | 1-5,7-9, 11,12,16 | |

| RECHERCHIERTE SACHGEBIETE (IPC) |
|---|
| F03D G01M G05B F16C |

Der vorliegende Recherchenbericht wurde für alle Patentansprüche erstellt

| Recherchenort | Abschlußdatum der Recherche | Prüfer |
|---|---|---|
| München | 8. Januar 2013 | Jucker, Chava |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.............................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 00 5801

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2013

| Im Recherchenbericht angeführtes Patentdokument | Datum der Veröffentlichung | Mitglied(er) der Patentfamilie | Datum der Veröffentlichung |
|---|---|---|---|
| EP 1548419 A1 | 29-06-2005 | AU 2003264360 A1<br>EP 1548419 A1<br>US 2006167659 A1<br>US 2007118333 A1<br>WO 2004027370 A1 | 08-04-2004<br>29-06-2005<br>27-07-2006<br>24-05-2007<br>01-04-2004 |
| WO 2004085987 A1 | 07-10-2004 | EP 1608945 A1<br>US 2006171625 A1<br>WO 2004085987 A1 | 28-12-2005<br>03-08-2006<br>07-10-2004 |
| WO 2010009750 A1 | 28-01-2010 | CN 102105774 A<br>EP 2316009 A1<br>US 2011219880 A1<br>WO 2010009750 A1 | 22-06-2011<br>04-05-2011<br>15-09-2011<br>28-01-2010 |
| US 2008279686 A1 | 13-11-2008 | AU 2007209631 A1<br>CN 101375053 A<br>EP 1977108 A1<br>JP 2009524760 A<br>NZ 569819 A<br>US 2008279686 A1<br>WO 2007085259 A1 | 02-08-2007<br>25-02-2009<br>08-10-2008<br>02-07-2009<br>30-07-2010<br>13-11-2008<br>02-08-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2153077 B1
- EP 2306006 A
- EP 0529354 A
- EP 0637734 A
- WO 2010125000 A
- EP 1273814 A